Europäisches Patentamt

European Patent Office

Office européen des brevets

(19)

(11) **EP 1 204 287 B1**

(12) **EUROPEAN PATENT SPECIFICATION**

(45) Date of publication and mention
of the grant of the patent:
**27.10.2004 Bulletin 2004/44**

(21) Application number: **01941238.6**

(22) Date of filing: **26.06.2001**

(51) Int Cl.7: **H04Q 7/36**

(86) International application number:
**PCT/JP2001/005436**

(87) International publication number:
**WO 2002/001900 (03.01.2002 Gazette 2002/01)**

(54) **BASE STATION APPARATUS AND CHANNEL ASSIGNING METHOD**

BASISSTATIONSVORRICHTUNG UND KANALVERGABEVERFAHREN

APPAREIL DE STATION DE BASE ET PROCEDE D'ATTRIBUTION DES VOIES

(84) Designated Contracting States:
**DE FR GB**

(30) Priority: **28.06.2000 JP 2000194528**
**28.06.2000 JP 2000194529**
**28.06.2000 JP 2000194530**
**28.06.2000 JP 2000194531**
**28.08.2000 JP 2000257770**
**29.08.2000 JP 2000259915**

(43) Date of publication of application:
**08.05.2002 Bulletin 2002/19**

(73) Proprietor: **MATSUSHITA ELECTRIC INDUSTRIAL CO., LTD.**
**Kadoma-shi, Osaka 571-8501 (JP)**

(72) Inventors:
• **SHOJI, Takahiro**
**Yokohama-shi, Kanagawa 221-0005 (JP)**
• **HIRAMATSU, Katsuhiko**
**Yokosuka-shi, Kanagawa 238-0031 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
EP-A- 0 817 521          WO-A-97/01941
WO-A-98/59517          WO-A-99/07172
JP-A- 6 197 079          JP-A- 7 307 972
JP-A- 9 312 875          JP-A- 11 046 174
JP-A- 11 275 035        JP-A- 61 244 137
JP-A- 61 280 130        US-A- 5 448 750

• ACX A-G ET AL: "Capacity evaluation of the UTRA FDD and TDD modes" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 1999-2003, XP010342228 ISBN: 0-7803-5565-2
• YUKITSUNA FURUYA ET AL.: 'Channel segregation, a distributed adaptive channel allocation scheme for mobile communication systems' IEICE TRANSACTIONS vol. E74, no. 6, June 1991, pages 1531 - 1537, XP002946690

## Description

Technical Field

The present invention relates to a base station apparatus and channel allocation method used for a radio communication system that performs channel segregation.

Background Art

An example of a conventional channel allocation method will be explained based on a document (Channel Segregation and Distributed Adaptive Channel Allocation Scheme for Mobile Communication Systems, IEICE TRANSACTIONS, VOL.E74, NO.6 JUNE 1991). FIG.1 is a flow chart compiled based on this document.

First, the base station apparatus defines precedence function $P_i$ (i: channel number) for each channel (radio resource). When a call occurs in this condition, the base station apparatus sets a channel which has "the highest precedence function" and which is at the same time not "busy" as a channel for observation and measures power of the interference signal of the channel concerned (ST1: step 1).

Then, it is decided whether the interference power is greater than a predetermined threshold or not (ST2). When the decision result shows that the interference power is greater than the predetermined threshold, the above-described channel is set to "busy" (ST3). On the contrary, if the interference power is equal to or smaller than the predetermined threshold, the above-described channel is set to "idle" (ST4).

When the above-described channel is "idle" , the base station apparatus starts a communication using the above-described channel and increases the precedence function of the channel (ST5). On the contrary, when the above-described channel is "busy", the base station apparatus decreases the precedence function of the channel (ST6), sets a channel with the next highest precedence function as the channel for observation and goes back to ST1 (ST7). When all channels are "busy", this case is considered as a call loss.

Because of such control over a precedence function for each channel, a channel whose precedence function (availability) is increased at a certain base station naturally has its precedence function decreased at other peripheral base stations. Such an algorithm is called "channel segregation".

However, since channel segregation only determines the channel searching order according to information on a past history, channel segregation has a problem that the information corresponding to the time at which channel search is performed is not used. More specifically, suppose a certain channel is frequently used and its priority in the precedence table is high. However, when the channel is not frequently used, if the same channel is used in another cell, measurements are repeated to determine whether the channel can be used or not according to the precedence table despite the fact that there is large interference and further allocation is not possible.

Furthermore, the above-described conventional channel allocation method updates the precedence table only when there is a call connection request, and therefore if no call connection requests occur for an extended period of time, the content of the precedence table is not updated in the meantime. Furthermore, once an allocatable channel is found, the above-described conventional channel allocation method does not update precedence functions for channels whose precedence functions are lower than the precedence function of the channel in question. Thus, when the content of the precedence table is not updated for an extended period of time and the slot allocation state of other cells changes, the above-described conventional channel allocation method ends up allocating channels based on the content of the precedence table that does not reflect the current channel quality.

Disclosure of Invention

It is a first object of the present invention to provide a base station apparatus and a channel allocation method capable of promoting channel segregation and performing efficient channel searching.

This object can be attained by searching for channels where call terminations have occurred with high priority because such channels are more likely to accommodate calls and thereby carrying out efficient channel searching.

It is a second object of the present invention to provide a base station apparatus and a channel allocation method capable of promoting channel allocation based on the content of a precedence table that reflects the current channel quality.

This object can be attained by carrying out processing of updating the precedence table at timing other than the channel allocation timing such as after a lapse of a certain period or timing corresponding to a call termination as well.

Brief Description of Drawings

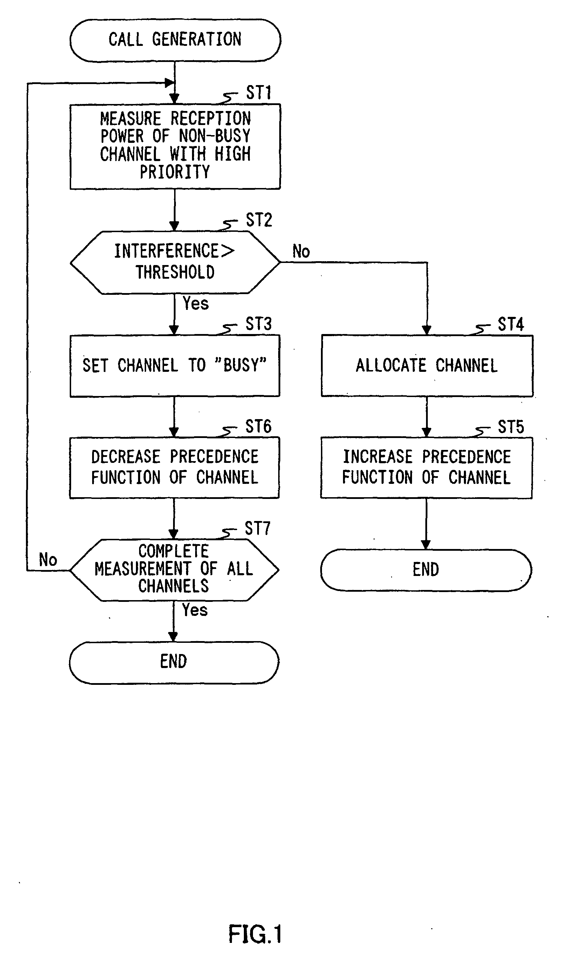

FIG.1 is a flow chart showing a channel allocation method in a conventional TDMA communication system;
FIG.2 is a block diagram showing a configuration of a communication terminal apparatus that communicates with a base station apparatus according to Embodiment 1 of the present invention;
FIG.3 is a block diagram showing a configuration of the base station apparatus according to Embodiment 1 of the present invention;

FIG.4 illustrates an example of an internal configuration of a precedence table of the base station apparatus according to Embodiment 1 of the present invention;

FIG.5 is a flow chart showing a channel allocation method according to Embodiment 1 of the present invention;

FIG.6 illustrates an example of an internal configuration of a precedence table of a base station apparatus according to Embodiment 2 of the present invention;

FIG.7 is a block diagram showing a configuration of a base station apparatus according to Embodiment 3 of the present invention;

FIG.8 is a flow chart showing channel allocation processing according to Embodiment 3 of the present invention;

FIG.9 is a flow chart showing uplink channel allocation processing according to Embodiment 3 of the present invention;

FIG.10 is a flow chart showing downlink channel allocation processing according to Embodiment 3 of the present invention;

FIG.11 is a flow chart showing update processing of a channel allocation precedence function during handover according to Embodiment 3 of the present invention;

FIG.12 is a block diagram showing a configuration of a communication terminal apparatus that communicates with a base station apparatus according to Embodiment 4 of the present invention;

FIG.13 is a block diagram showing a configuration of the base station apparatus according to Embodiment 4 of the present invention;

FIG.14 is a flow chart showing update processing of a precedence table according to Embodiment 4 of the present invention;

FIG.15 is a flow chart showing update processing of a precedence table according to Embodiment 5 of the present invention;

FIG.16 is a block diagram showing a configuration of a base station apparatus according to Embodiment 6 of the present invention;

FIG.17 illustrates an internal configuration of an uplink precedence table according to Embodiment 6 of the present invention;

FIG.18 is a flow chart showing an uplink channel allocation method in the base station apparatus according to Embodiment 6 of the present invention;

FIG.19 is a block diagram showing a configuration of a base station apparatus according to Embodiment 7 of the present invention;

FIG.20 illustrates an internal configuration of an uplink precedence table according to Embodiment 7 of the present invention;

FIG.21 is a flow chart showing an uplink channel allocation method of the base station apparatus according to Embodiment 7 of the present invention;

FIG.22 is a block diagram showing a configuration of a base station apparatus according to Embodiment 8 of the present invention;

FIG.23 is a block diagram showing a configuration of a base station apparatus according to Embodiment 9 of the present invention;

FIG.24A illustrates an example of a situation of code multiplexing in each slot;

FIG.24B illustrates an example of a situation of code multiplexing in each slot; and

FIG.25 is a flow chart showing an IHO procedure of the base station apparatus according to Embodiment 9 of the present invention.

Best Mode for Carrying out the Invention

With reference now to the attached drawings, embodiments of the present invention will be explained below.

(Embodiment 1)

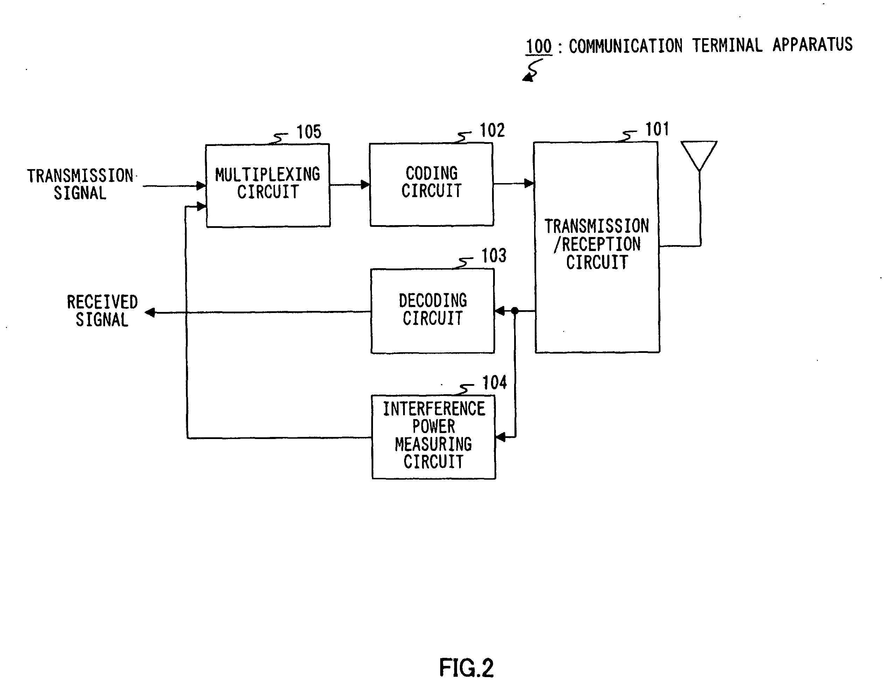

FIG.2 is a block diagram showing a configuration of a communication terminal apparatus that communicates with a base station apparatus according to Embodiment 1.

In FIG.2, communication terminal apparatus 100 comprises transmission/reception circuit 101 that transmits/receives a modulated signal, coding circuit 102 that codes a transmission signal and decoding circuit 103 that decodes desired data from the received signal demodulated by transmission/reception circuit 101. Furthermore, communication terminal apparatus 100 comprises interference power measuring circuit 104 that measures power of an interference signal from the received signal demodulated by transmission/reception circuit 101 and multiplexing circuit 105 that multiplexes the output from interference power measuring circuit 104 and the transmission signal and outputs the multiplexed signal to coding circuit 102.

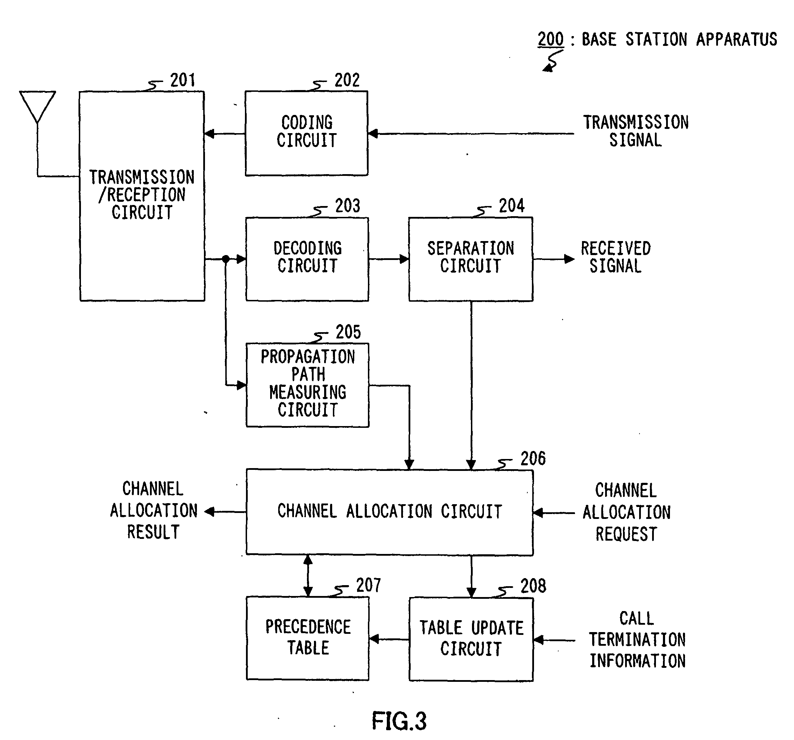

FIG.3 is a block diagram showing a configuration of the base station apparatus according to Embodiment 1.

In FIG.3, base station apparatus 200 comprises transmission/reception circuit 201 that transmits/receives a modulated signal, coding circuit 202 that codes a transmission signal and decoding circuit 203 that decodes desired data from the received signal demodulated by transmission/reception circuit 201.

Base station apparatus 200 further comprises separation circuit 204 that separates information of the power of the interference signal sent from communication terminal apparatus 100 from the data decoded by decoding circuit 203 and propagation path measuring circuit 205 that checks the channel occupation situation from the received signal demodulated by transmission/reception circuit 201 and outputs the obtained result as channel information.

Base station apparatus 200 further comprises channel allocation circuit 206 that performs channel allocation, precedence table 207 that records precedence functions for all slots and a call termination order, that is, the order in which call terminations occurred in the respective slots and table update circuit 208 that updates precedence table 207.

Then, detailed operations of channel allocation circuit 206 and table update circuit 208 during channel searching will be explained.

Table update circuit 208 updates priority information of precedence table 207 based on the channel allocation information output from channel allocation circuit 206. More specifically, table update circuit 208 increases the value of priority of a slot to which a channel has been allocated and decreases the value of priority of a slot to which no channel could be allocated. When a call termination occurs in a slot, table update circuit 208 records the call termination order, that is, the order in which call terminations occurred in the respective slots in precedence table 207.

When a new channel allocation request is generated, channel allocation circuit 206 references precedence table 207, checks whether a new channel can be allocated or not to the slot in which the last call termination occurred as a free slot candidate and if there is free space in the slot, channel allocation circuit 206 allocates a new channel.

When a new channel could not be allocated to the free slot candidate selected above, channel allocation circuit 206 selects free slot candidates in ascending order of time differences between the time at which the table was referenced and times at which call terminations occurred and checks whether channels can be allocated or not.

When channel allocation circuit 206 could not allocate channels after searching for a predetermined number of slots in which call terminations occurred, channel allocation circuit 206 references precedence table 207, selects free slot candidates and checks whether channels can be allocated or not.

Then, an example of selecting free slot candidates will be explained.

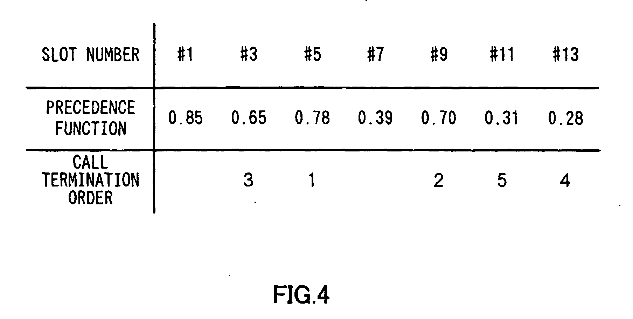

FIG.4 illustrates an example of an internal configuration of a precedence table of the base station apparatus according to Embodiment 1.

Precedence table 207 saves a slot number for each slot in connection with a slot precedence function and a call termination order, that is, the order in which call terminations occurred in the respective slots. In FIG. 4, (#1 to #13) indicates each slot number. For example, the value of the precedence function of slot #3 is "0.65" and its call termination order is "3".

An example of a case where the number of slots subject to priority searching according to call terminations is assumed to be "2" will be explained below.

Channel allocation circuit 206 references the call termination order of precedence table 207 first and searches for the slot where the last call termination occurred. More specifically, channel allocation circuit 206 searches for slot #3, that is, a slot with the highest number in the call termination order.

When channel allocation to slot #3 is not possible, table update circuit 208 decreases the value of the precedence function of slot #3 and channel allocation circuit 206 searches for slot #9 where a call termination occurred before slot #3.

When channel allocation to slot #9 is not possible, table update circuit 208 decreases the value of the precedence function of slot #9 and since the number of slots subject to priority searching according to call terminations is "2", channel allocation circuit 206 continues searching starting with the slot with the next highest number in the precedence function value. More specifically, channel allocation circuit 206 searches for slot #1 with the highest precedence function value of "0.85" among slots excluding already searched slot #3 and slot #9.

Hereafter, channel allocation circuit 206 searches for slots in descending order of precedence function values.

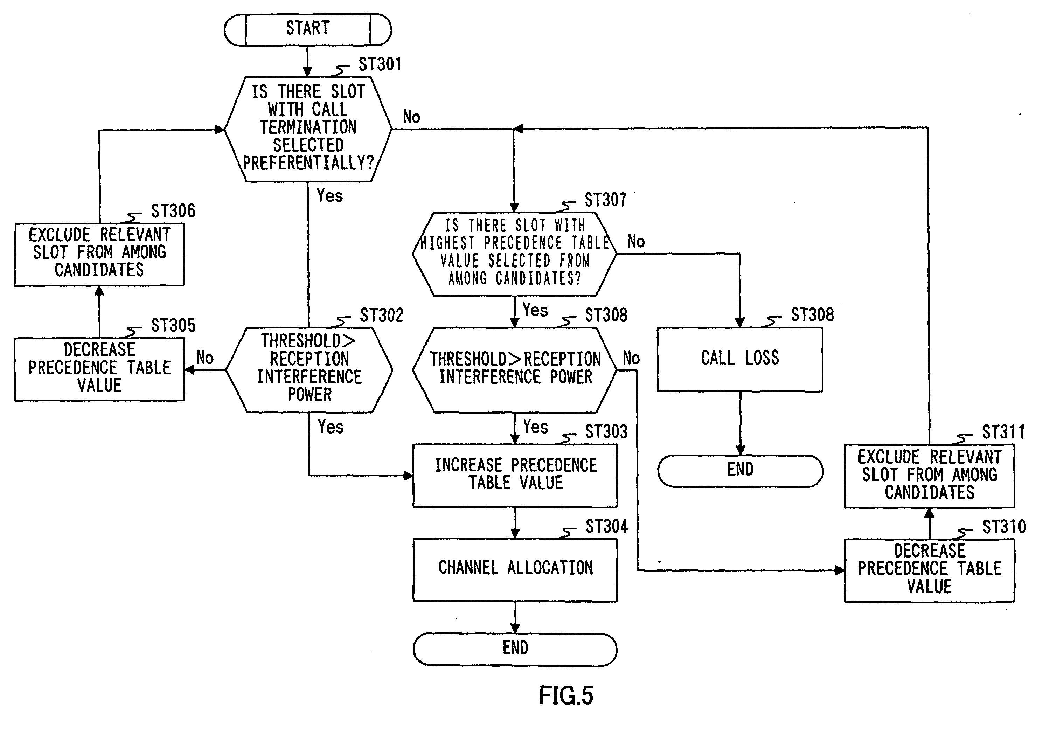

Then, the channel allocation method at base station apparatus 200 in the above configuration will be explained using the flow chart in FIG.5.

In ST301, channel allocation circuit 206 references precedence table 207 and selects slots in descending call termination order, that is, the order in which call terminations occurred in the respective slots, as free slot candidates.

In ST301, if there is a free slot candidate where a call termination occurred, channel allocation circuit 206 decides whether a reception interference power value of the free slot candidate is smaller than a threshold or not in ST302.

When the reception interference power value is smaller than the threshold in ST302, table update circuit 208 increases the precedence function value of the free slot candidate of precedence table 207 in ST303. In ST304, channel allocation circuit 206 allocates a channel to the above-described candidate slot and finishes the allocation processing.

When the reception interference power value is equal to or greater than the threshold in ST302, table update circuit 208 decreases the precedence function value of the free slot candidate of precedence table 207 in ST305. In ST306, channel allocation circuit 206 excludes the free slot candidate whose reception interference power value is equal to or greater than the threshold from among the candidates and the process goes back to ST301.

When there are no free slot candidates where call terminations occurred in ST301, channel allocation circuit 206 references precedence table 207 and selects slots with higher precedence function values as free slot candidates in ST307.

When there are no free slot candidates in ST307, channel allocation circuit 206 carries out call loss processing and finishes the processing in ST308.

When there is some free slot candidate in ST307, channel allocation circuit 206 decides whether the reception interference power value of the free slot candidate is smaller than a threshold or not in ST309 and if the reception interference power value is smaller than the threshold, the process moves on to ST303.

When the reception interference power value is equal to or greater than the threshold in ST309, table update circuit 208 decreases the precedence function value of the free slot candidate of precedence table 207 in ST310. In ST311, channel allocation circuit 206 excludes the free slot candidate whose reception interference power value is equal to or greater than the threshold from among the candidates and the process goes back to ST307.

Thus, according to the radio communication apparatus of this embodiment, channels where call terminations occurred are searched with higher priority and the channels where call terminations occurred are more likely to accommodate calls, and in this way, channels capable of accommodating calls can be searched with higher priority, which allows efficient channel allocation.

Furthermore, the radio communication apparatus of this embodiment searches for channels where call terminations occurred and can discover channels capable of accommodating calls even if no channels are found which would possibly accommodate calls.

It is also possible to set a predetermined effective time limit for information of the call termination order, that is, the order in which call terminations occurred in the respective slots. For example, table update circuit 208 deletes the information of the call termination order a predetermined time after the time at which a call termination occurred from precedence table 207.

Thus, this embodiment deletes the information of the order of channels where call terminations occurred after a lapse of a predetermined time and excludes channels where the possibility of accommodating calls will decrease from channels to be searched with priority, and can thereby search for channels capable of accommodating calls with higher priority, allowing efficient channel allocation.

(Embodiment 2)

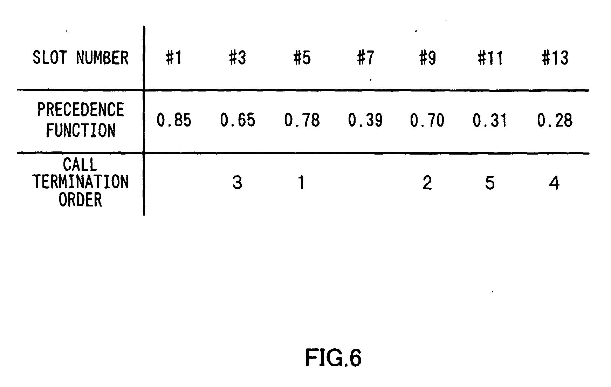

FIG.6 illustrates an example of an internal configuration of a precedence table of a base station apparatus according to Embodiment 2.

As shown in FIG.6, precedence table 207 saves a slot number for each slot in connection with a slot precedence function and a call termination order, that is, the order in which call terminations occurred in the respective slots. In FIG.6, (#1 to #13) indicates each slot number. For example, the value of the precedence function of slot #3 is "0.65" and its call termination order is "3".

When the radio communication apparatus according to Embodiment 1 above allocates channels, the radio communication apparatus references the precedence table shown in FIG.6, performs channel searching by selecting free slot candidates in ascending order of time differences between the time at which channel allocation started and the times at which call terminations occurred, and therefore performs channel searching in slot #11 where the last call termination occurred, followed by slot #13.

However, slot #11 and slot #13 have low precedence function values and these slots may be used by other cells, which may increase interference preventing successful channel allocation.

Thus, to solve the above-described problem, when many call terminations occur temporarily, this embodiment compares precedence function values in slots where call terminations occurred, preferentially searches for slots having a predetermined function value or higher and excludes slots unlikely to accommodate calls from preferential search targets.

The following is an example of a case where preferential searching is performed for slots with the first and second highest precedence function values where call terminations occurred.

When a new channel allocation request is issued, channel allocation circuit 206 references precedence table 207, selects slots with the first and second highest precedence function values where call terminations occurred as free slot candidates, checks whether new channels can be allocated or not and allocates new channels when there are available free slots.

In the example of FIG.6, slot #5 satisfies the condition, and so slot #5 is selected as a free slot candidate.

Then, channel allocation circuit 206 searches for free slot candidates under the above-described conditions and when no channel could be allocated, channel allocation circuit 206 references the precedence functions in precedence table 207, selects free slot candidates and checks whether channels can be allocated or not.

Thus, when many call terminations occur temporarily, the radio communication apparatus of this embodiment compares precedence function values in slots where call terminations occurred, preferentially searches for slots having a predetermined function value or higher and excludes slots unlikely to accommodate calls from preferential search targets, and can thereby restrict the number of channels to be searched preferentially according to call terminations.

Above-described Embodiments 1 and 2 can allocate uplink and downlink channels. Furthermore, when uplink and downlink are allocated in pairs, the base station apparatus only needs to have a channel precedence table for one link. Above-described Embodiments 1 and 2 are also applicable to multiplexed communications such as frequency division multiplexing communication. In this case, a plurality of channels is searched through frequency division, etc. instead of slots used in time division multiplexing communication and allocated as channels to accommodate calls.

(Embodiment 3)

Here, when the uplink and downlink of slots are switched to handle asymmetric traffic in a TDD communication system, precedence tables to be used for channel searching are also switched simultaneously with the switching. However, a conventional channel allocation method does not consider contention or switching between the uplink and downlink on each channel, and the conventional channel allocation method has a problem that the lack of such consideration prevents efficient operations.

To solve this problem, Embodiment 3 will describe a case where uplink/downlink precedence functions are controlled for all channels individually and a channel of the link opposite to the link of the searched channel is controlled as well.

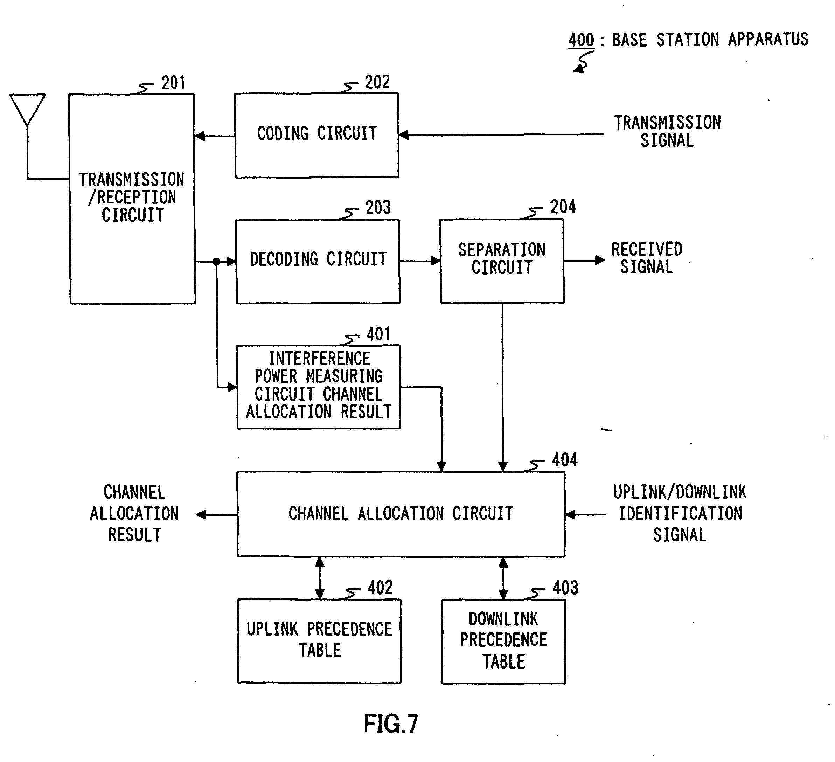

FIG.7 is a block diagram showing a configuration of a base station apparatus according to this embodiment. The components of base station apparatus 400 in FIG.7 which are common to those of base station apparatus 200 in FIG.3 are assigned the same reference numerals as those in FIG.3 and detailed explanations thereof are omitted. Moreover, the communication terminal apparatus according to this embodiment has the same configuration as the configuration of communication terminal apparatus 100 in FIG.2 shown in Embodiment 1 and therefore explanations thereof are omitted.

Compared to base station apparatus 200 in FIG.3, base station apparatus 400 in FIG.7 adopts a configuration with propagation path measuring circuit 205, channel allocation circuit 206 and table update circuit 208 removed and with interference power measuring circuit 401, uplink precedence table 402, downlink precedence table 403 and channel allocation circuit 404 added.

Interference power measuring circuit 401 measures power of an interference signal from the received signal demodulated by transmission/reception apparatus 201 and outputs the result. Uplink precedence table 402 and downlink precedence table 403 are provided for each channel and uplink precedence table 402 records uplink precedence functions for all channels. Downlink precedence table 403 records downlink precedence functions for all channels.

Channel allocation circuit 404 allocates channels on the uplink or downlink based on the power of the interference signal measured at communication terminal apparatus 100, the power of the interference signal measured at base station apparatus 400 and uplink/downlink identification signals and also updates uplink precedence table 402 and downlink precedence table 403 after channel allocation. When there are many downlink channel allocation requests, downlink channels are more frequently allocated and the downlink precedence functions in the precedence table also increase. On the contrary, when there are many uplink channel allocation requests, uplink channels are more frequently allocated and the uplink precedence functions in the precedence table also increase. Uplink/downlink identification signals are generated inside base station apparatus 400, but these signals are generated by a radio network controller (RNC) when channel allocation is performed by the RNC apparatus.

During channel allocation, base station apparatus 400 sends a signal instructing the slot whose interference signal power is to be measured to communication terminal apparatus 100. Upon receipt of the instruction, communication terminal apparatus 100 measures interference signal power of slots to be measured and sends the result to base station apparatus 400. Base station apparatus 400 outputs the interference signal power value reported from communication terminal apparatus 100 to channel allocation circuit 404, measures interference signal power of the slot in question at the own station and outputs the result to channel allocation circuit 404. Channel allocation circuit 404 receives not only the interference signal power value but also the slot number to be allocated and uplink/downlink identification signals.

Then, channel allocation operations of communication terminal apparatus 100 and base station apparatus 400 in the above-described configurations will be explained. Operations of communication terminal apparatus 100 and base station apparatus 400 will not be explained separately but all together.

(Channel allocation)

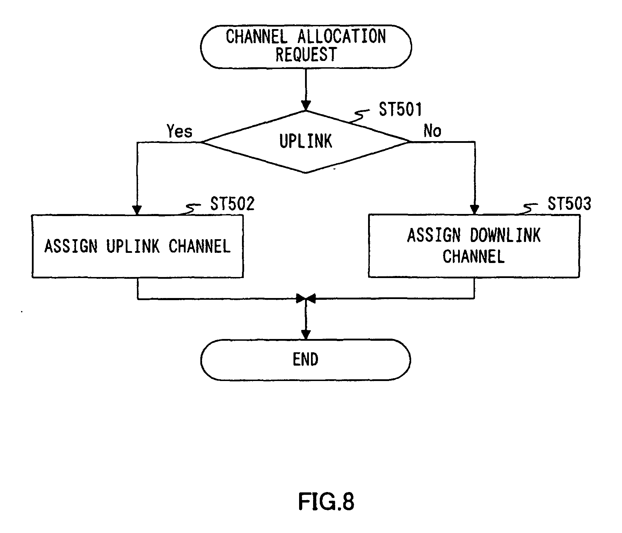

FIG.8 is a flow chart showing a channel allocation operation according to this embodiment.

First, in ST501, either the uplink or downlink is decided. In the case of the uplink, the process moves on to ST502 and allocates an uplink channel. In the case of the downlink, the process moves on to ST503 and allocates a downlink channel.

Since base station apparatus 400 has uplink precedence table 402 and downlink precedence table 403 for each channel as described above, if there are more downlink channel allocation requests, downlink channels are more frequently allocated and the downlink precedence function in the precedence table also increases.

(Uplink channel allocation processing)

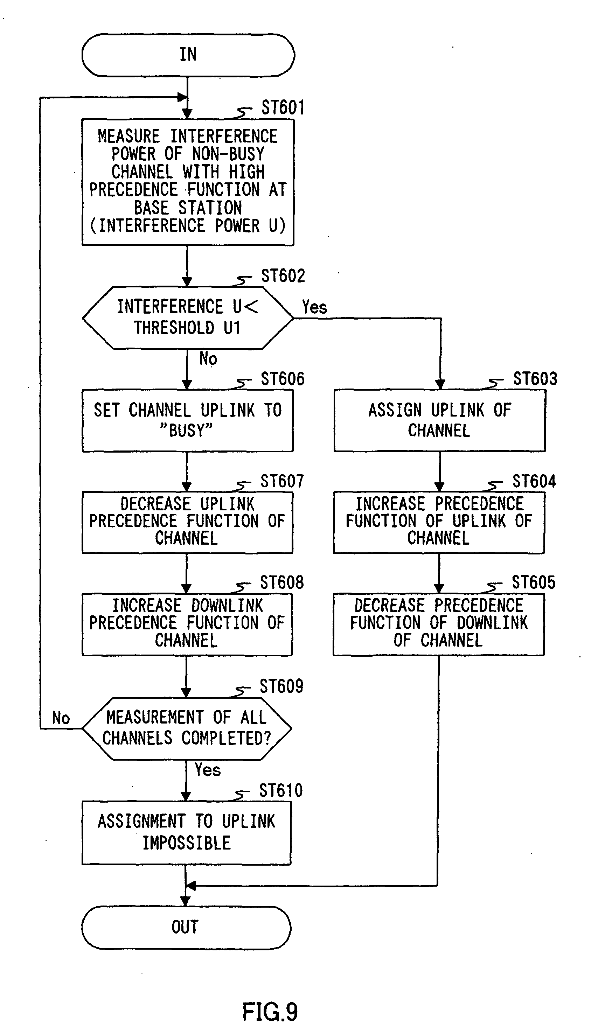

FIG.9 is a flow chart showing an uplink channel allocation method according to this embodiment.

Upon receipt of an uplink channel allocation request, base station apparatus 400 measures interference power (interference U) of a channel which has a high precedence function value and is not "BUSY" in ST601.

In ST602, base station apparatus 400 compares interference power U and threshold U1. When the comparison result shows that interference power U is smaller than threshold U1, the uplink interference power is small and therefore base station apparatus 400 decides that it is possible to secure the reception quality of the uplink. Therefore, when interference power U is smaller than threshold U1 (YES), base station apparatus 400 allocates the relevant channel to the uplink in ST603. Then, in ST604, base station apparatus 400 increases the uplink precedence function of the relevant channel. Then, in ST605, base station apparatus 400 decreases the downlink precedence function of the relevant channel.

On the other hand, when interference power U is equal to or greater than threshold U1 (NO) in ST602, base station apparatus 400 sets the uplink of the relevant channel to "BUSY" in ST606. Then, in ST607, base station apparatus 400 decreases the uplink precedence function of the relevant channel. Then, in ST608, base station apparatus 400 increases the downlink precedence function of the relevant channel.

Then, it is decided in ST609 whether measurement of all channels is completed or not, and if there are some remaining channels, the processing from ST601 is repeated. When interference power U is equal to or greater than threshold U1 on all channels, base station apparatus 400 decides in ST610 that it is impossible to allocate channels and exits the processing.

(Downlink channel allocation processing)

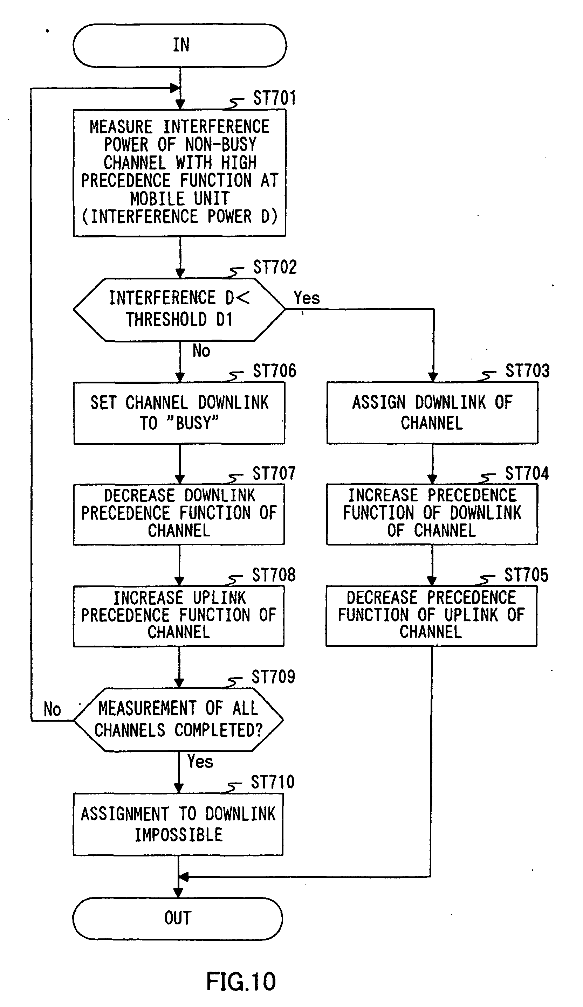

FIG.10 is a flow chart showing a downlink channel allocation method according to this embodiment.

Upon receipt of a downlink channel allocation request, base station apparatus 400 allows communication terminal apparatus 100 to measure interference power (interference D) of a channel which has a high precedence function value and is not "BUSY" and report the result in ST701.

Then, in ST702, base station apparatus 400 compares interference power D and threshold D1. When this comparison result shows that interference power D is smaller than threshold D1, the downlink interference power is small, and therefore base station apparatus 400 decides that it is possible to secure the reception quality of the downlink. Therefore, when interference power D is smaller than threshold D1 (YES), base station apparatus 400 allocates the relevant channel to the downlink in ST703. Then, in ST704, base station apparatus 400 increases the downlink precedence function of the relevant channel. Then, in ST705, base station apparatus 400 decreases the uplink precedence function of the relevant channel.

On the other hand, when interference power D is equal to or greater than threshold D1 (NO) in ST702, base station apparatus 400 sets the downlink of the relevant channel to "BUSY" in ST706. Then, in ST707, base station apparatus 400 decreases the downlink precedence function of the relevant channel. Then, in ST708, base station apparatus 400 increases the uplink precedence function of the relevant channel.

Then, it is decided in ST709 whether measurement of all channels is completed or not, and if there are some remaining channels, the processing from ST701 is repeated. When interference power D is equal to or greater than threshold D1 on all channels, base station apparatus 400 decides in ST710 that it is impossible to allocate channels and exits the processing.

Thus, this embodiment prepares a dedicated "uplink" precedence table and a dedicated "downlink" precedence table and controls both tables separately, and can thereby perform efficient operation even if uplink/downlink allocations are mixed.

Furthermore, it is possible to update the precedence function of a link to which no channel is allocated at any time by decreasing the precedence function of a channel of a link opposite to the link of the channel whose precedence function is increased or by increasing the precedence function of a channel of a link opposite to the link of the channel whose precedence function is decreased. This makes it possible to allocate channels based on the content of the precedence table that reflects the current channel quality when the uplink and downlink are switched and prevent unnecessary channel searches.

Here, if the precedence function has a high value during link switchover, this leads to drastic switchover between the uplink and downlink, which is not desirable from the standpoint of influences of disturbance, etc.

On the contrary, it is also possible to reset the precedence function of the relevant channel to a predetermined value such as a center value when channel allocation circuit 404 switches between the uplink and downlink. Since this suppresses the precedence function of the channel which has switched between the uplink and downlink, it is possible to prevent drastic switchover between the uplink and downlink and at the same time reduce the amount of calculation to calculate the precedence function.

(Processing of updating channel allocation precedence function during handover)

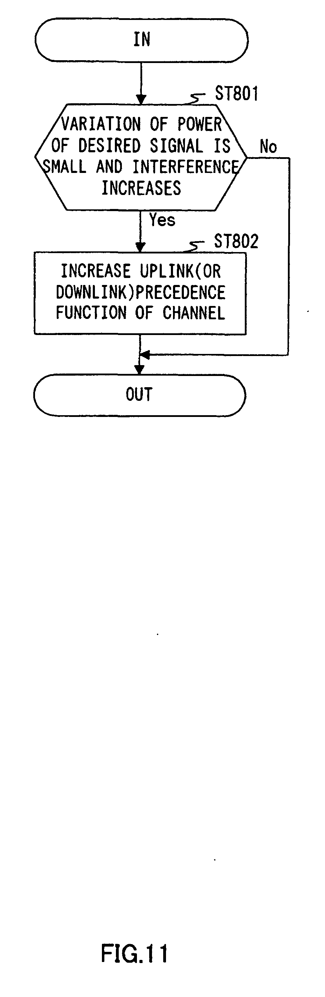

Then, the processing of updating a channel allocation precedence function during handover will be explained with reference to the flow chart in FIG.11.

The following two cases or a combination thereof can be considered as the momentum for handover.

(1) When power of a desired signal decreases because of movement of a communication terminal apparatus

(2) When power of an interference signal increases because another base station apparatus or mobile unit starts transmission

In the case (2) above, when handover takes place although power of a desired signal is small, the channel is then susceptible to interference and the probability that it will be difficult to maintain communication due to the interference is high.

Thus, in ST801 of FIG.11, the magnitude of power of the desired signal and the amount of power increased of the interference signal are decided. In the case where the fluctuation of power of the desired signal is small and the power of the interference signal increases, the uplink (or downlink) precedence function of the relevant channel is decreased in ST802.

Thus, when interference increases due to the start of communication by another base station or mobile station and handover is required for this reason, the precedence functions of channels susceptible to interference are decreased thereby reducing occasions of handover.

The above-described flow chart is stored in memory, etc. as programmed data and a control section (not shown) performs channel allocation control according to this stored program. This program is naturally divided into two parts, one for communication terminal apparatus 100 and the other for base station apparatus 400.

(Embodiment 4)

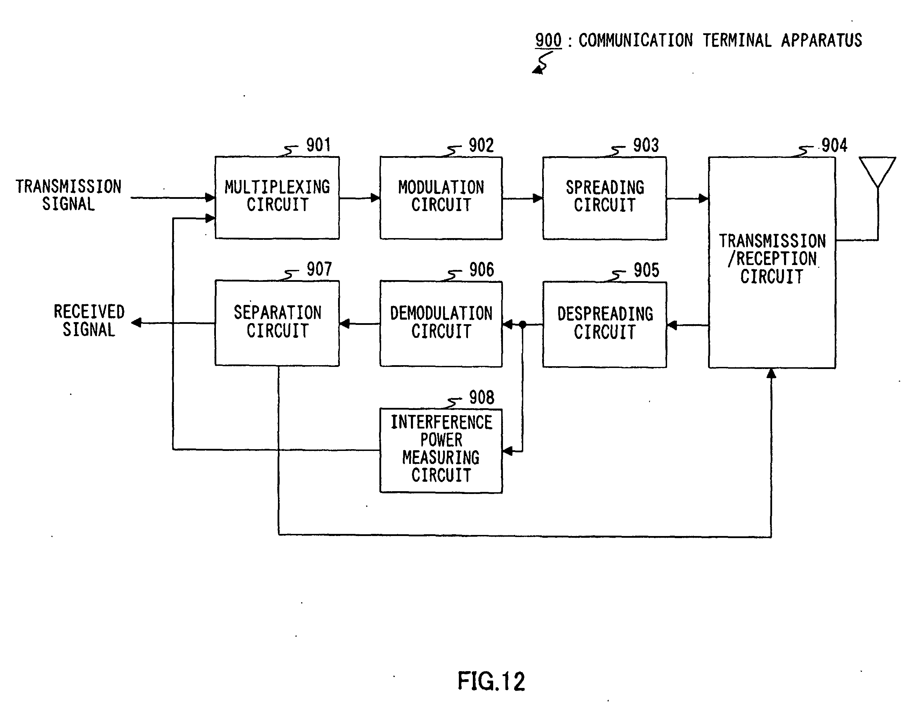

FIG.12 is a block diagram showing a configuration of a communication terminal apparatus that communicates with a base station apparatus according to Embodiment 4 of the present invention. Communication terminal apparatus 900 mainly comprises multiplexing circuit 901, modulation circuit 902, spreading circuit 903, transmission/reception circuit 904, despreading circuit 905, demodulation circuit 906, separation circuit 907 and interference power measuring circuit 908.

Multiplexing circuit 901 multiplexes interference power information output from interference power measuring circuit 908 and a transmission signal and outputs the multiplexed signal to modulation circuit 902. Modulation circuit 902 performs primary modulation such as QPSK on the output signal of multiplexing circuit 901 and outputs to spreading circuit 903. Spreading circuit 903 multiplies the output signal of modulation circuit 902 by a predetermined spreading code and outputs to transmission/reception circuit 904.

Transmission/reception circuit 904 transmits/receives the modulated signal using assigned slots. More specifically, transmission/reception circuit 904 converts the output signal of spreading circuit 903 to a radio frequency signal and amplifies and sends the signal by radio from an antenna. Transmission/reception circuit 904 also amplifies a signal received by the antenna and converts the signal to a baseband signal in terms of frequency and outputs to despreading circuit 905.

Despreading circuit 905 multiplies the output signal of transmission/reception circuit 904 by the same spreading code as that of the other end of communication and outputs to demodulation circuit 906 and interference power measuring circuit 908. Demodulation circuit 906 demodulates the output signal of despreading circuit 905 and outputs to separation circuit 907. Separation circuit 907 separates channel allocation information from the output signal of demodulation circuit 906 and outputs to transmission/reception circuit 904. Interference power measuring circuit 908 measures reception interference power of the downlink from the output signal of despreading circuit 905 and outputs the measurement result to multiplexing circuit 901 as interference power information.

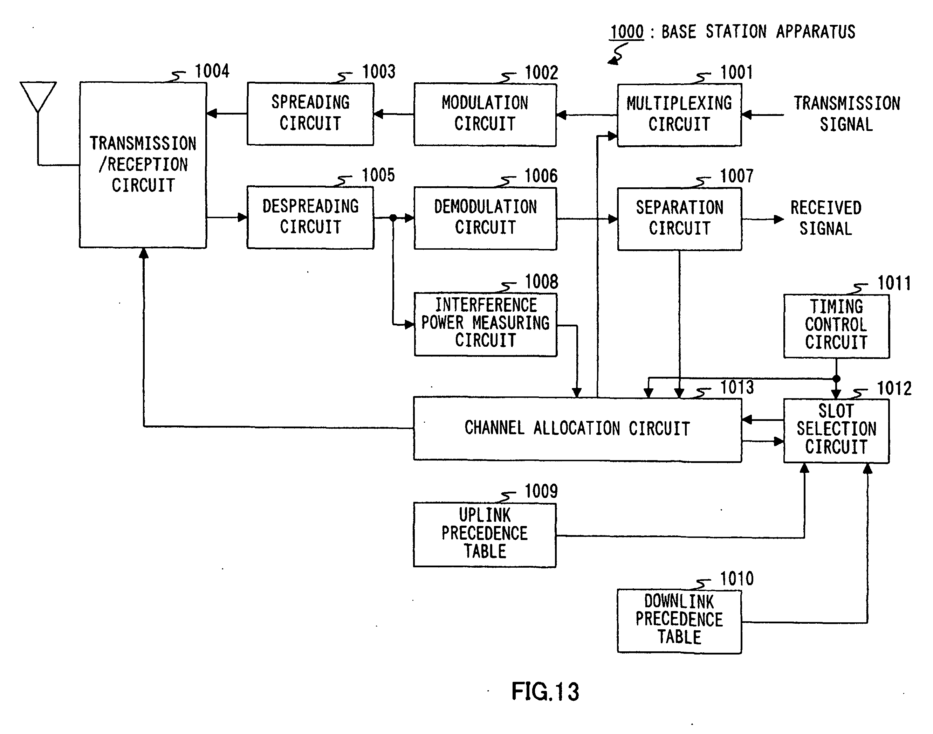

FIG.13 is a block diagram showing a configuration of a base station apparatus according to this embodiment. Base station apparatus 1000 mainly comprises multiplexing circuit 1001, modulation circuit 1002, spreading circuit 1003, transmission/reception circuit 1004, despreading circuit 1005, demodulation circuit 1006, separation circuit 1007, interference power measuring circuit 1008, uplink precedence table 1009, downlink precedence table 1010, timing control circuit 1011, slot selection circuit 1012 and channel allocation circuit 1013.

Multiplexing circuit 1001 multiplexes the channel allocation information output from channel allocation circuit 1013 and a transmission signal and outputs the multiplexed signal to modulation circuit 1002. Modulation circuit 1002 performs primary modulation such as QPSK on the output signal of multiplexing circuit 1001 and outputs to spreading circuit 1003. Spreading circuit 1003 multiplies the output signal of modulation circuit 1002 by a predetermined spreading code and outputs to transmission/reception circuit 1004.

Transmission/reception circuit 1004 transmits/receives the modulated signal using assigned slots. More specifically, transmission/reception circuit 1004 converts the output signal of spreading circuit 1003 to a radio frequency signal and amplifies and sends the signal by radio from an antenna. Transmission/reception circuit 1004 also amplifies a signal received by the antenna and converts the signal to a baseband signal in terms of frequency and outputs to despreading circuit 1005.

Despreading circuit 1005 multiplies the output signal of transmission/reception circuit 1004 by the same spreading code as that of the other end of communication and outputs to demodulation circuit 1006 and interference power measuring circuit 1008. Demodulation circuit 1006 demodulates the output signal of despreading circuit 1005 and outputs to separation circuit 1007. Separation circuit 1007 separates interference power information from the output signal of demodulation circuit 1006 and outputs to channel allocation circuit 1013. Interference power measuring circuit 1008 measures reception interference power of the uplink from the output signal of despreading circuit 1005 and outputs the measurement result to channel allocation circuit 1013.

Uplink precedence table 1009 records the uplink precedence function and number of codes to be multiplexed of the uplink for each slot. Downlink precedence table 1010 records the downlink precedence function and number of codes to be multiplexed of the downlink for each slot.

Timing control circuit 1011 instructs slot selection circuit 1012 and channel allocation circuit 1013 to start processing of updating the precedence table at predetermined timing.

Slot selection circuit 1012 selects a slot for which channel searching is to be carried out (hereinafter referred to as "search target slot") at the timing instructed by timing control circuit 1011 based on the precedence functions recorded in uplink precedence table 1009 or downlink precedence table 1010.

When a call connection is requested, channel allocation circuit 1013 decides whether an estimated value of the propagation path quality such as reception interference power of the search target slot is greater or smaller than a threshold, carries out channel allocation processing based on the decision result and updates uplink precedence table 1009 or downlink precedence table 1010. Furthermore, even at timing other than timing at which a call connection is requested, channel allocation circuit 1013 updates uplink precedence table 1009 or downlink precedence table 1010 at any timing instructed from timing control circuit 1011 as appropriate.

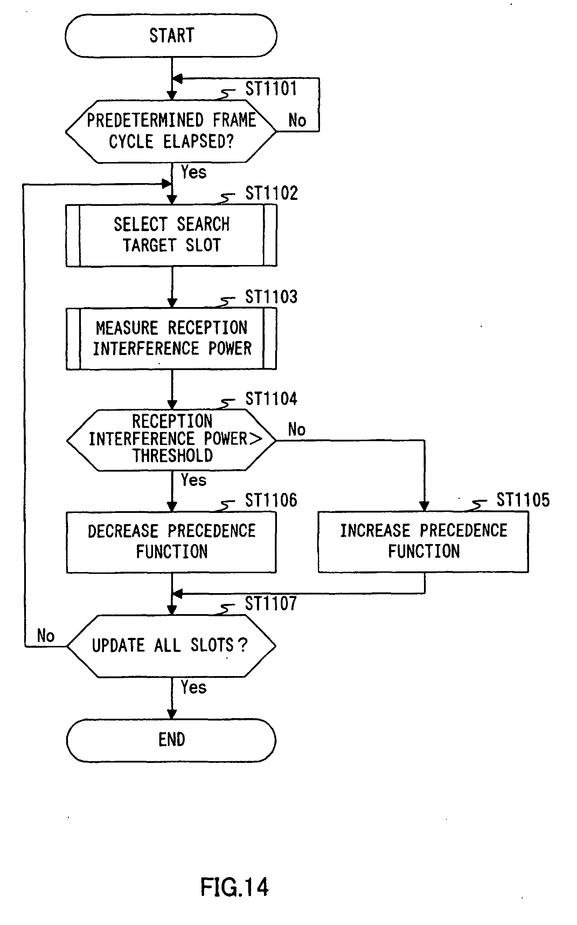

Then, the procedure for updating the precedence table according to this embodiment will be explained using the flow chart in FIG.14. FIG.14 shows a case where processing of updating a precedence table is carried out after a lapse of a predetermined frame cycle.

When timing control circuit 1011 detects in ST1101 that the predetermined frame cycle has elapsed, slot selection circuit 1012 selects a search target slot in ST1102 and channel allocation circuit 1013 obtains reception interference power in ST1103.

The reception interference power of the uplink is measured by interference power measuring circuit 1008 and output to channel allocation circuit 1013. On the other hand, the reception interference power of the downlink is measured by communication terminal apparatus 100 and the measurement result is sent to base station apparatus 1000 as interference power information. Then, the interference power information is separated by separation circuit 1007 of base station apparatus 1000 and output to channel allocation circuit 1013.

Then, in ST1104, channel allocation circuit 1013 decides whether the reception interference power of the search target slot is greater or smaller than a threshold and if the reception interference power is equal to or smaller than the threshold, channel allocation circuit 1013 increases the precedence function of the search target slot in ST1105. On the other hand, if the reception interference power is greater than the threshold, channel allocation circuit 1013 decreases the precedence function of the search target slot in ST1106.

Then, in ST1107, above-described steps from ST1102 to ST1106 are repeated for all slots.

Thus, since it is possible to update the content of the precedence table at any time by updating precedence table for each frame cycle, the base station apparatus can allocate channels based on the content of the precedence table that reflects the current channel quality.

Here, the propagation path quality and the decision as to whether channel allocation is possible or not change as the call connection situation such as call termination or intra-cell handover changes. Therefore, in order to reflect the current channel quality in the precedence table, it is necessary to update the precedence table at this timing.

In this case, when a call termination or intra-cell handover takes place, timing control circuit 1011 instructs slot selection circuit 1012 and channel allocation circuit 1013 to start to update the precedence table. Slot selection circuit 1012 and channel allocation circuit 1013 carry out processing similar to the processing in ST1102 to ST1107 in FIG.14 above.

This makes it possible to establish correspondences between the channel quality that has changed according to the call connection situation and the content of the precedence table.

This embodiment has described the case where reception interference power is used as an estimated value of propagation path quality, but the present invention is not limited to this and can also obtain similar effects using other estimated values of propagation path quality.

(Embodiment 5)

Here, in the case of a CDMA (Code Division Multiple Access)/TDD (Time Division Duplex) communication system, a channel is specified with a time slot (hereinafter simply referred to as "slot") and code and a plurality of calls can be code-multiplexed.

It is a known fact that code pooling which decreases the number of slots to be occupied by increasing the number of codes to be multiplexed for each slot is more effective than slot pooling which increases the number of slots to be occupied by decreasing the number of codes to be multiplexed for each slot in terms of frequency utilization efficiency.

Embodiment 5 will explain precedence table update processing capable of maintaining the code pooling state in the case of a CDMA/TDD communication system.

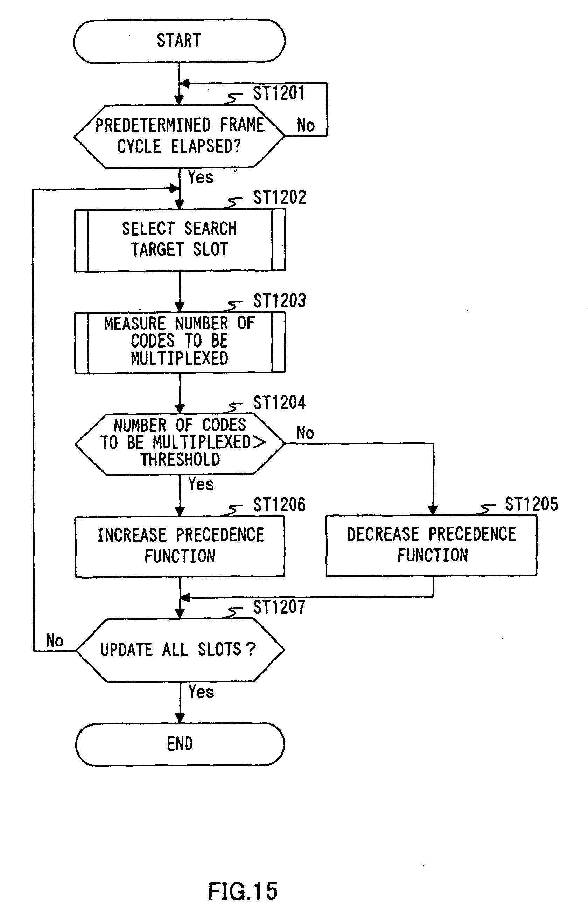

FIG.15 is a flow chart showing update processing for a precedence table according to this embodiment. FIG.15 shows a case where the precedence table update processing is carried out in a certain frame cycle.

When timing control circuit 1011 detects that a predetermined frame cycle has elapsed in ST1201, slot selection circuit 1012 selects a search target slot in ST1202.

Then, channel allocation circuit 1013 measures the number of codes to be multiplexed of the search target slot and decides whether the number of codes to be multiplexed is greater or smaller than a threshold in ST1203 and ST1204.

Then, when the number of codes to be multiplexed is equal to or smaller than the threshold, channel allocation circuit 1013 decreases the precedence function of the search target slot in ST1205. On the other hand, when the number of codes to be multiplexed is greater than the threshold, channel allocation circuit 1013 increases the precedence function of the search target slot in ST1206.

Then, in ST1207, above-described steps ST1202 to ST1206 are repeated for all slots.

Thus, by increasing the precedence function of a slot with a high number of codes to be multiplexed, channel searching is started with a slot with a high number of codes to be multiplexed at the time of channel allocation, thus making it possible to maintain the state of code pooling.

This embodiment has described the case where precedence table update processing is performed in a certain frame cycle, but it is also possible to start precedence table update processing at timing at which the call connection situation is changed such as call termination or intra-cell handover request as described in Embodiment 4.

(Embodiment 6)

In the case of a CDMA/TDD communication system, the number of codes that can be multiplexed in each slot varies depending on a transmission rate, and therefore it is necessary to consider the transmission rate to implement efficient channel segregation when a multi-rate transmission system is used.

Focusing on this aspect, Embodiment 6 will describe a case where channel searching is performed using a CDMA/TDD communication system by setting a threshold and precedence function for each transmission rate and selecting slots in descending order of precedence functions with respect to the required transmission rate.

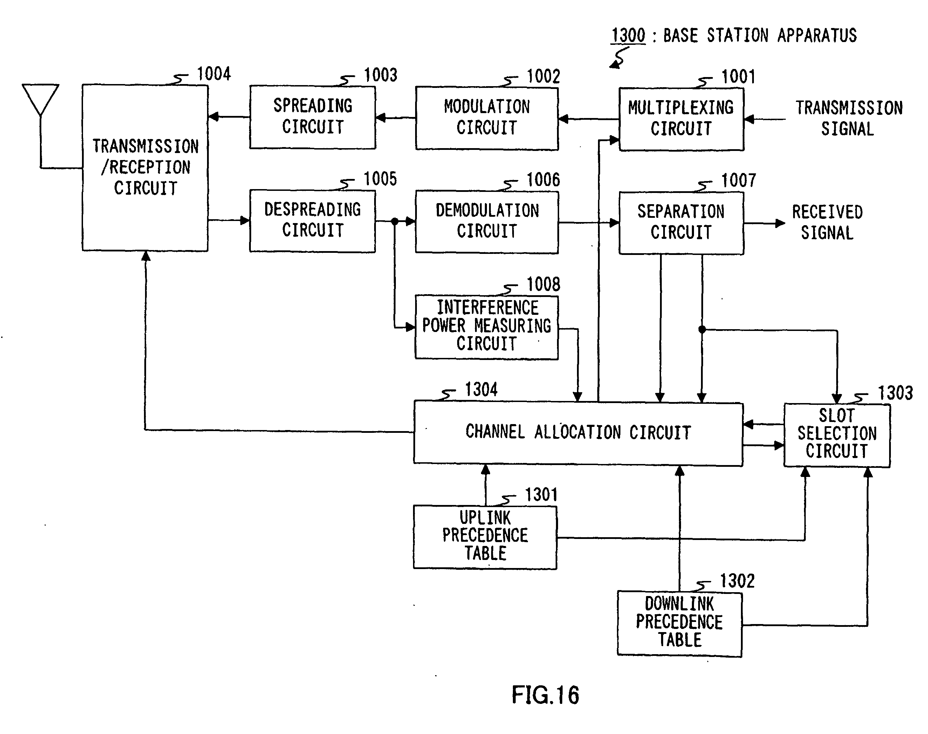

FIG.16 is a block diagram showing a configuration of a base station apparatus according to this embodiment. The components of base station apparatus 1300 in FIG.16 which are common to those of base station apparatus 1000 in FIG.13 are assigned the same reference numerals as those in FIG.13 and detailed explanations thereof are omitted. Moreover, the communication terminal apparatus according to this embodiment has the same configuration as the configuration of communication terminal apparatus 900 in FIG.12 shown in Embodiment 4 and therefore explanations thereof are omitted.

Compared to base station apparatus 1000 in FIG.13, base station apparatus 1300 in FIG.16 adopts a configuration with uplink precedence table 1009, downlink precedence table 1010, timing control circuit 1011, slot selection circuit 1012 and channel allocation circuit 1013 removed and with uplink precedence table 1301, downlink precedence table 1302, slot selection circuit 1303 and channel allocation circuit 1304 added.

Separation circuit 1007 separates interference power information from the output signal of demodulation circuit 1006 and outputs to channel allocation circuit 1304. Separation circuit 1007 also separates a signal indicating a desired transmission rate when a call connection request is issued and outputs the signal to slot selection circuit 1303 and channel allocation circuit 1304.

Interference power measuring circuit 1008 measures reception interference power of the uplink from the output signal of despreading circuit 1005 and outputs the measurement result to channel allocation circuit 1304.

Uplink precedence table 1301 records a threshold for each transmission rate and records a precedence function of the uplink for each slot and for each transmission rate. Downlink precedence table 1302 records a threshold for each transmission rate and records a precedence function of the downlink for each slot and for each transmission rate.

When a signal indicating the transmission rate is input from separation circuit 1007, slot selection circuit 1303 selects a search target slot based on the precedence function of the relevant transmission rate recorded in uplink precedence table 1301 or downlink precedence table 1302.

Channel allocation circuit 1304 receives the reception interference power of the search target slot from interference power measuring circuit 1008 or separation circuit 1007 and carries out channel searching. More specifically, channel allocation circuit 1304 decides whether the reception interference power of the search target slot is greater or smaller than the threshold of the relevant transmission rate recorded in uplink precedence table 1301 or downlink precedence table 1302 and if the reception interference power of the search target slot is equal to or smaller than the threshold, channel allocation circuit 1304 allocates a channel to the relevant search target slot, and if the reception interference power of the search target slot is greater than the threshold, channel allocation circuit 1304 requests slot selec-

tion circuit 1303 for the next search target slot.

When an uplink channel is allocated, interference power measuring circuit 1008 of base station apparatus 1300 measures the reception interference power of the search target slot and outputs the measurement result to channel allocation circuit 1304. On the other hand, when a downlink channel is allocated, communication terminal apparatus 900 measures the reception interference power of the search target slot and outputs the measurement result to base station apparatus 1300 as interference power information. Then, separation circuit 1007 of base station apparatus 1300 outputs the received interference power information to channel allocation circuit 1304.

Then, channel allocation circuit 1304 updates uplink precedence table 1301 and downlink precedence table 1302 after the channel is allocated. Updating the precedence function based on the result of channel searching allows efficient channel allocation.

Furthermore, channel allocation circuit 1304 outputs channel allocation information indicating the slots to which channels were allocated to multiplexing circuit 1001 or transmission/reception circuit 1004.

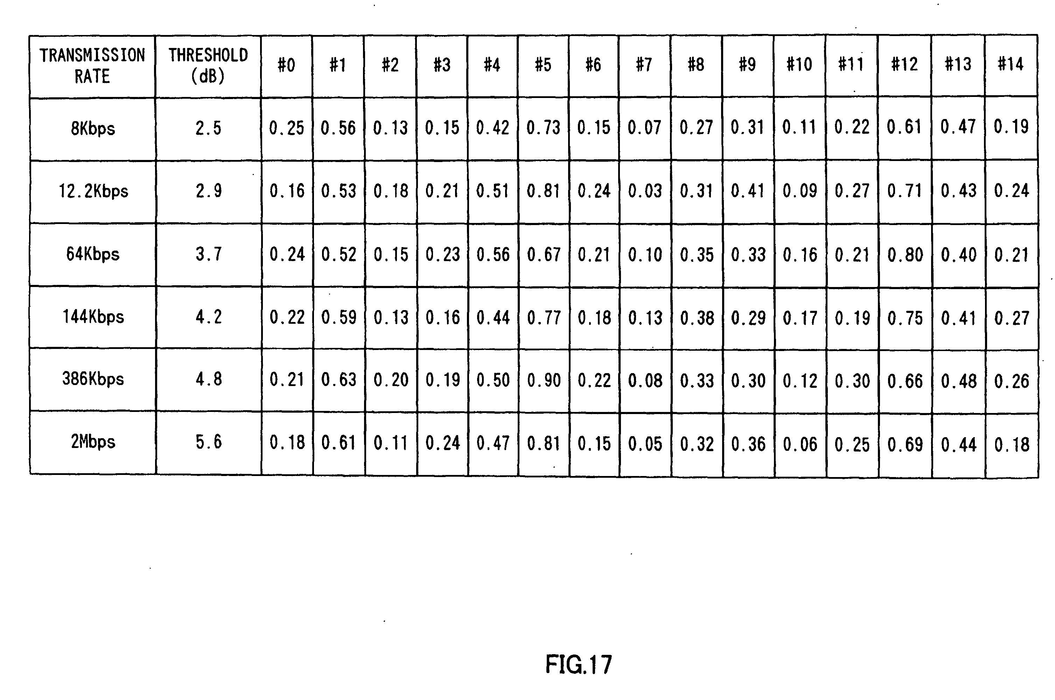

FIG.17 illustrates an internal configuration of uplink precedence table 1301. As shown in FIG.17, uplink precedence table 1301 records a threshold for each transmission rate and records an uplink precedence function for each slot and each transmission rate. In FIG. 17, (#0 to #14) indicates each slot number. In FIG.17, for example, the threshold of transmission rate 8 kbps is "2.5 dB" and the precedence function of the uplink with transmission rate 8 kbps and slot #0 is "0.25". On the other hand, downlink precedence table 1302 also records a threshold for each transmission rate and records a downlink precedence function for each slot and each transmission rate in the same way as for uplink precedence table 1301.

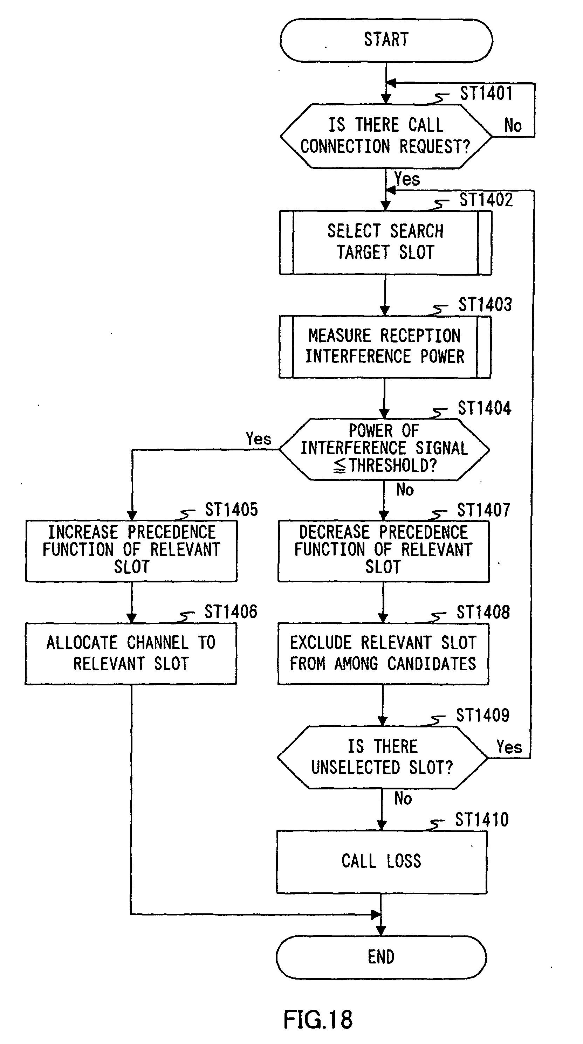

The method of channel allocation for the uplink in base station apparatus 1300 in the above-described configuration will be explained below using the flow chart in FIG.18.

First, when a call connection request is issued, separation circuit 1007 outputs signals indicating the transmission rates of timing control circuit 1303 and channel allocation circuit 1304, timing control circuit 1303 selects a precedence function of the relevant transmission rate and channel allocation circuit 1304 selects a threshold of the relevant transmission rate (ST1401). Then, slot selection circuit 1303 selects a search target slot at the relevant transmission rate (ST1402), channel allocation circuit 1304 obtains the reception interference power (ST1403) and decides whether the reception interference power is greater or smaller than the threshold of the relevant transmission rate (ST1404).

When the result of the decision in ST1404 shows that the reception interference power is equal to or smaller than the threshold, channel allocation circuit 1304 increases the precedence function of the search target slot at the relevant transmission rate in uplink precedence table 1301 (ST1405) and allocates a channel to the search target slot (ST1406).

On the other hand, when the result of the decision in ST1404 shows that the reception interference power is greater than the threshold, channel allocation circuit 1304 decreases the precedence function of the search target slot in uplink precedence table 1301 (ST1407) and slot selection circuit 1303 excludes the search target slot from among the candidates (ST1408).

In the case where some slots are not searched yet, the process goes back to ST1402 (ST1409). On the other hand, in the case where there are no unsearched slots in ST1409, the base station apparatus regards this case as a call loss (ST1410).

The same method can also be used for the downlink to allocate channels.

In FIG.17, with regard to the precedence function of the slot at transmission rate 12.2 kbps, that of #5 is "0.81" which is the highest of all, and therefore slot selection circuit 1303 selects #5 as the search target slot first.

Then, when the result of channel searching by channel allocation circuit 1304 shows that the reception interference power of #5 is greater than a predetermined threshold (2.9 dB), slot selection circuit 1303 selects #12 having the next highest precedence function as the search target slot.

Thus, by setting a threshold for each transmission rate, selecting slots in descending order of precedence functions with a desired transmission rate and carrying out channel searching, it is possible to implement efficient channel segregation in the case of a multirate transmission system according to a CDMA/TDD communication system.

(Embodiment 7)

Embodiment 7 will describe a case where the order in which slots are searched is determined in consideration of precedence functions and the number of codes to be multiplexed in order to implement channel segregation which naturally becomes code pooling in a CDMA/TDD communication system.

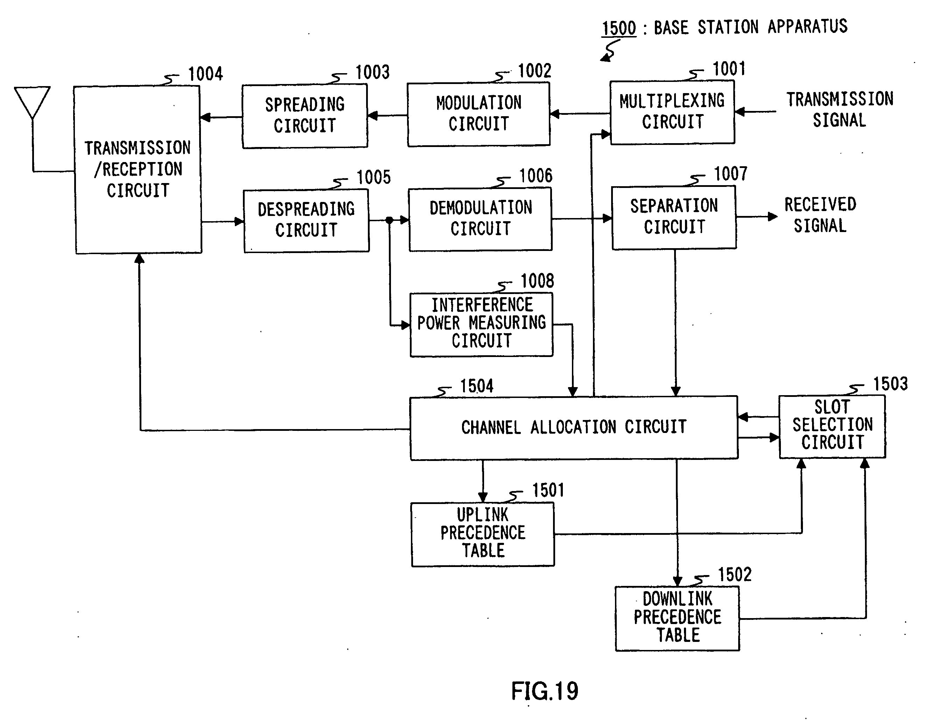

FIG.19 is a block diagram showing a configuration of a base station apparatus according to this embodiment. The components of base station apparatus 1500 in FIG.19 which are common to those of base station apparatus 1000 in FIG.13 are assigned the same reference numerals as those in FIG.13 and explanations thereof are omitted. Moreover, the communication terminal apparatus according to this embodiment has the same configuration as the configuration of communication terminal apparatus 900 in FIG.12 shown in Embodiment 4 and therefore explanations thereof are omitted.

Compared to base station apparatus 1000 in FIG.13, base station apparatus 1500 in FIG.19 adopts a configuration with uplink precedence table 1009, downlink precedence table 1010, timing control circuit 1011, slot selection circuit 1012 and channel allocation circuit 1013 removed and with uplink precedence table 1501, downlink precedence table 1502, slot selection circuit 1503 and channel allocation circuit 1504 added.

Separation circuit 1007 separates interference power information from the output signal of demodulation circuit 1006 and outputs to channel allocation circuit 1504. Interference power measuring circuit 1008 measures reception interference power of the uplink from the output signal of despreading circuit 1005 and outputs the measurement result to channel allocation circuit 1504.

Uplink precedence table 1501 records a precedence function and the number of codes to be multiplexed of the uplink for each slot. Downlink precedence table 1502 records a precedence function and the number of codes to be multiplexed of the downlink for each slot.

Slot selection circuit 1503 selects a search target slot based on the precedence function and the number of codes to be multiplexed recorded in uplink precedence table 1501 or downlink precedence table 1502.

Channel allocation circuit 1504 receives the reception interference power of the search target slot from interference power measuring circuit 1008 or separation circuit 1007 and carries out channel searching. More specifically, channel allocation circuit 1504 decides whether the reception interference power of the search target slot is greater or smaller than a threshold and if the reception interference power of the search target slot is equal to or smaller than the threshold, channel allocation circuit 1504 allocates a channel to the relevant search target slot, and if the reception interference power of the search target slot is greater than the threshold, channel allocation circuit 1504 requests slot selection circuit 1503 for the next search target slot.

When an uplink channel is allocated, interference power measuring circuit 1008 of base station apparatus 1500 measures the reception interference power of the search target slot and outputs the measurement result to channel allocation circuit 1504. On the other hand, when a downlink channel is allocated, communication terminal apparatus 900 measures the reception interference power of the search target slot and outputs the measurement result to base station apparatus 1500 as interference power information. Then, separation circuit 1007 of base station apparatus 1500 outputs the received interference power information to channel allocation circuit 1504.

Then, channel allocation circuit 1504 updates uplink precedence table 1501 and downlink precedence table 1502 after the channel is allocated. Updating the precedence function based on the result of channel searching allows efficient channel allocation.

Furthermore, channel allocation circuit 1504 outputs the channel allocation information indicating the slots to which channels are allocated to multiplexing circuit 1001 or transmission/reception circuit 1004.

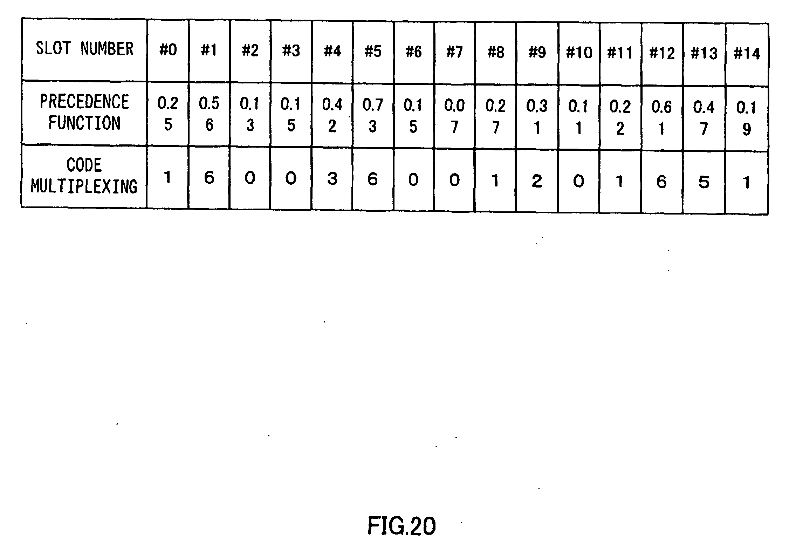

FIG.20 illustrates an internal configuration of uplink precedence table 1501. In FIG.20, (#0 to #14) indicates each slot number. In FIG.20, for example, the precedence function of the uplink with slot #0 is "0.25" and the number of codes to be multiplexed is "1". On the other hand, downlink precedence table 1502 also records a downlink precedence function and the number of codes to be multiplexed for each slot in the same way as for uplink precedence table 1501.

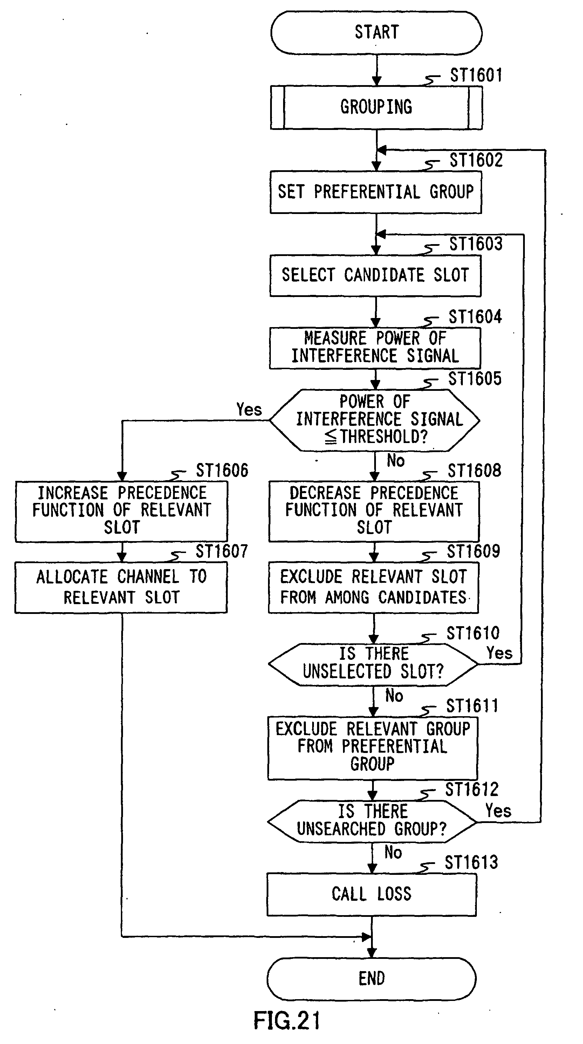

The method of channel allocation for the uplink by base station apparatus 1500 in the above-described configuration will be explained using the flow chart in FIG.21.

First, slot selection circuit 1503 references the number of codes to be multiplexed of each slot recorded in uplink precedence table 1501 and groups slots according to the number of codes to be multiplexed (ST1601). Then, slot selection circuit 1503 sets the group with the highest number of codes to be multiplexed from among unsearched groups as a preferential group (ST1602).

Then, slot selection circuit 1503 references a precedence function of each slot recorded in uplink precedence table 1501 and selects a slot with the highest precedence function from among slots that belong to the preferential group (hereinafter referred to as "selection candidate slot") as a search target slot (ST1603).

Then, interference power measuring circuit 1008 measures reception interference power of the search target slot (ST1604) and channel allocation circuit 1504 decides whether the reception interference power is greater or smaller than a threshold (ST1605).

When the decision result in ST1605 shows that the reception interference power is equal to or smaller than the threshold, channel allocation circuit 1504 increases the precedence function of the search target slot in uplink precedence table 1501 (ST1606) and allocates a channel to the search target slot (ST1607).

On the other hand, when the decision result in ST1605 shows that the reception interference power is greater than the threshold, channel allocation circuit 1504 decreases the precedence function of the search target slot in uplink precedence table 1501 (ST1608) and slot selection circuit 1503 excludes the search target slot from among the candidates (ST1609).

Then, in the case where there are still some selection candidate slots in the preferential group, the process goes back to ST1603 (ST1610). On the other hand, in the case where there are no selection candidate slots in the preferential group, slot selection circuit 1503 excludes the relevant group from the preferential group (ST1611).

When there are some unsearched groups, the process goes back to ST1602 (ST1612). On the other hand, when there are no unsearched groups in ST1612, the base station apparatus regards this case as a call loss (ST1613).

The same method can also be used for the downlink to allocate channels.

In the case of FIG.20 above, the highest number of codes to be multiplexed is "6" and the selection candidate slots that belong to the preferential group are #1, #5 and #12. The precedence functions of selection candidate slots #1, #5 and #12 are "0.56", "0.73" and "0.61", and so slot selection circuit 1503 selects #5 as the search target slot first.

Then, when the result of channel searching by channel allocation circuit 1504 shows that the reception interference power of #5 is greater than a predetermined threshold, slot selection circuit 1503 selects #12 as the next search target slot.

Thus, by searching channels in descending order of precedence functions from among the slots with the highest number of codes to be multiplexed, it is possible to implement channel segregation which naturally becomes code pooling in a CDMA/TDD communication system.

Furthermore, a slot with a high number of codes to be multiplexed is not likely to be used for communication by a peripheral base station and its reception interference power is likely to be equal to or lower than a threshold, and therefore starting channel searching with a slot with a high number of codes to be multiplexed can shorten the time required for slot allocation and reduce the amount of calculation.

(Embodiment 8)

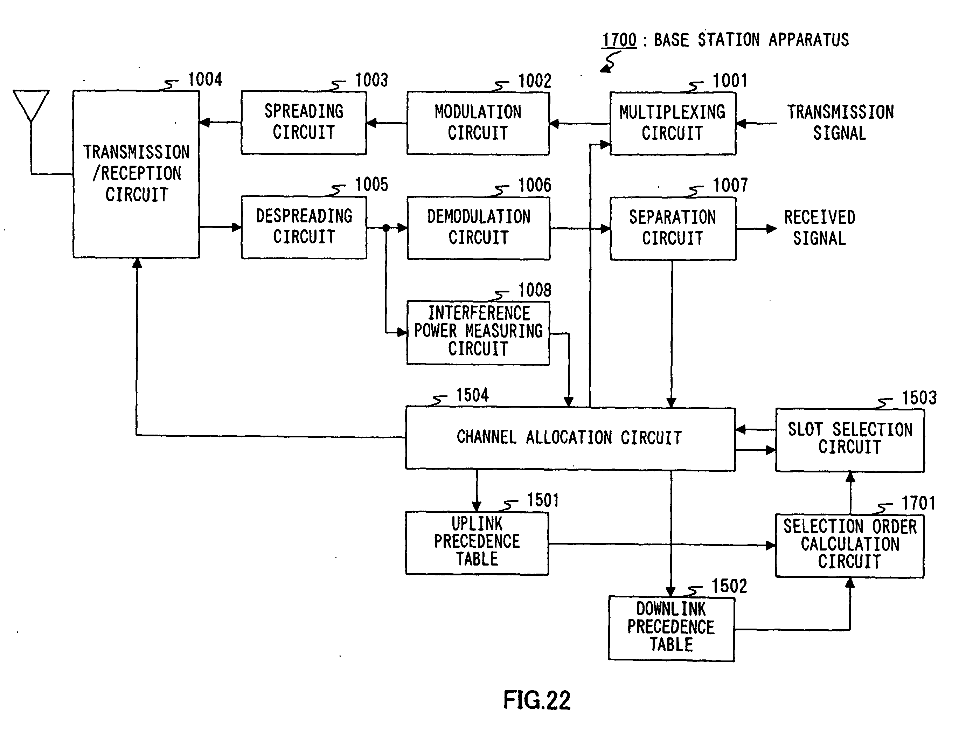

FIG.22 is a block diagram showing a configuration of a base station apparatus according to Embodiment 8 of the present invention. The components of base station apparatus 1700 in FIG.22 which are common to those of base station apparatus 1500 in FIG.19 are assigned the same reference numerals as those in FIG.19 and explanations thereof are omitted. Moreover, the communication terminal apparatus that communicates with the base station apparatus according to this embodiment has the same configuration as the configuration in FIG.12 and therefore explanations thereof are omitted.

Compared to base station apparatus 1500 in FIG.19, base station apparatus 1700 in FIG.22 adopts a configuration with selection order calculation circuit 1701 added and slot selection circuit 1503 has a different content of operation.

Selection order calculation circuit 1701 calculates selection order function pn using precedence function vn and the number of codes to be multiplexed Mn as parameters according to Expression (1) below. In Expression (1), n denotes a slot number and $\alpha$ denotes a weighting factor.

$$pn = vn + \alpha \, Mn \qquad (1)$$

Slot selection circuit 1503 selects a slot with the highest selection order function pn from among unselected slots as the search target slot.

Thus, by carrying out channel searching in descending order of selection order functions using a precedence function of each slot and the number of codes to be multiplexed of each slot as parameters, it is possible to implement channel segregation which naturally becomes code pooling in a CDMA/TDD communication system.

(Embodiment 9)

The code multiplexing situation of each slot here changes with call terminations, etc. On the contrary, if a slot which has been once allocated on each channel does not change until a call termination, this will cause the code pooling state to collapse.

In consideration of this point, Embodiment 9 will describe a case where slots to be allocated on each channel will be changed in response to changes in the situation so that the code pooling state is maintained in a CDMA/TDD communication system. More specifically, intra-cell handover (hereinafter referred to as "IHO") which has been used to improve the communication quality of a call which has deteriorated so far due to interference will be used to realize code pooling.

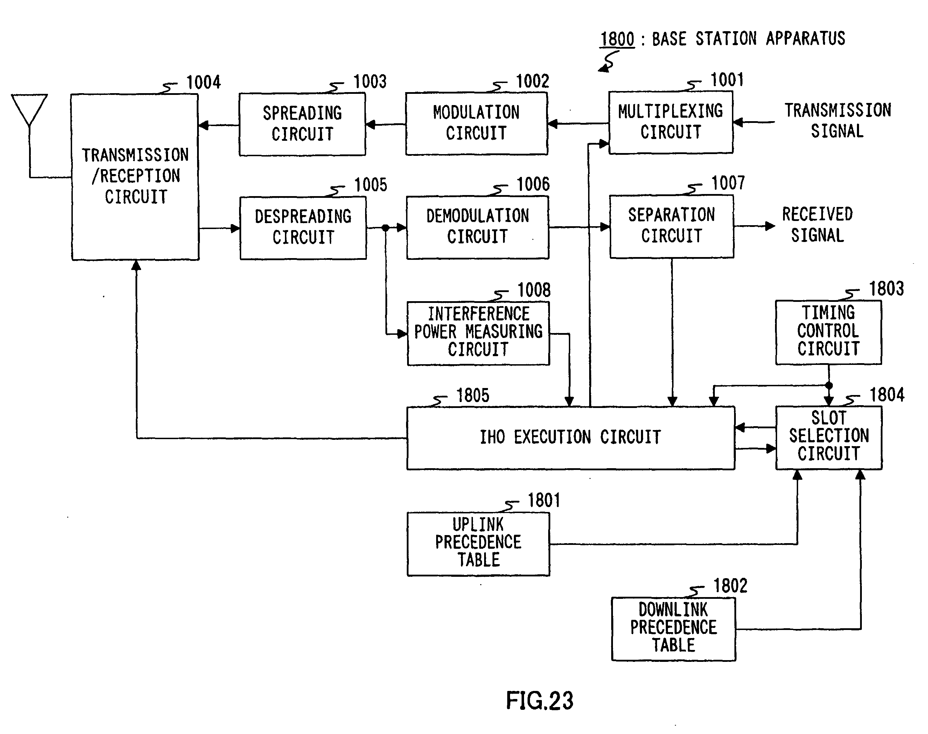

FIG.23 is a block diagram showing a configuration of a base station apparatus according to this embodiment. The components of base station apparatus 1800 in FIG.23 which are common to those of base station apparatus 1000 in FIG.13 are assigned the same reference numerals as those in FIG.13 and explanations thereof are omitted. Moreover, the communication terminal apparatus according to this embodiment has the same configuration as the configuration of communication terminal apparatus 900 in FIG.12 shown in Embodiment 4, and therefore explanations thereof are omitted.

Compared to base station apparatus 1000 in FIG.13, base station apparatus 1800 in FIG.23 adopts a configuration with uplink precedence table 1009, downlink precedence table 1010, timing control circuit 1011, slot selection circuit 1012 and channel allocation circuit 1013 removed and with uplink precedence table 1801, downlink precedence table 1802, timing control circuit 1803, slot selection circuit 1804 and IHO execution circuit 1805 added.

Separation circuit 1007 separates interference power information from the output signal of demodulation circuit 1006 and outputs to IHO execution circuit 1805. Interference power measuring circuit 1008 measures reception interference power of the uplink from the output signal of despreading circuit 1005 and outputs the measurement result to IHO execution circuit 1805.

Uplink precedence table 1801 records a precedence function and the number of codes to be multiplexed of the uplink for each slot. Downlink precedence table 1802 records a precedence function and the number of codes to be multiplexed of the downlink for each slot.

Timing control circuit 1803 instructs slot selection circuit 1804 and IHO execution circuit 1805 to start IHO. The timing at which timing control circuit 1803 instructs the start of IHO includes timing at which a call connection request is issued, timing at which a call termination occurred and timing after a lapse of a predetermined frame cycle, etc. and each timing has its specific effect.

Starting IHO at timing at which a call connection request is issued makes it possible to consider the number of codes to be multiplexed and the number of slots occupied requested by the relevant call, and therefore it is possible to perform IHO most directly to accommodate the call. For example, when there is a call connection request with 1 code, 1 slot for the uplink and 8 codes, 3 slots for the downlink, IHO is performed until resources that satisfy the request are secured. This has the effect of reducing a call loss rate.

Furthermore, performing IHO at timing of call termination produces free space in the slot in which call termination occurred, having the effect of increasing the probability of successful IHO.

However, when IHO is performed at timing at which a call connection request is issued or timing at which call termination occurs, the content of the precedence table may not be updated for an extended period of time. In this case, if the slot allocation states of other cells change, IHO may be performed based on the content of the precedence table that does not reflect the actual channel quality.

On the contrary, performing IHO in a predetermined frame cycle makes it possible to update the content of the precedence table at any time and thereby solve the above-described problem.

Slot selection circuit 1804 selects a channel to be moved with IHO (hereinafter referred to as "movement target channel") and a search target slot at the timing instructed by timing control circuit 1803 based on the precedence function and the number of codes to be multiplexed recorded in uplink precedence table 1801 or downlink precedence table 1802.

The method of selecting a movement target channel includes a method of selecting the relevant channel of a slot to which only channel with one code is allocated based on the number of codes to be multiplexed , a method of selecting a channel allocated to a slot with the lowest precedence function value, etc. Furthermore, the method of selecting a search target slot includes a method of selecting slots in descending order of precedence function values or method of selecting slots in descending order of the number of codes to be multiplexed, etc.

IHO execution circuit 1805 carries out channel searching in the search target slot at the timing instructed by timing control circuit 1803 and perform IHO so that the code pooling state is maintained.

Then, channel search by IHO execution circuit 1805 during IHO will be explained.

When an uplink channel is searched, interference power measuring circuit 1008 of base station apparatus 1800 measures the reception interference power of the search target slot and outputs the measurement result to IHO execution circuit 1805. On the other hand, when a downlink channel is searched, communication terminal apparatus 1200 measures the reception interference power of the search target slot and outputs the measurement result to base station apparatus 1800 as interference power information. Then, separation circuit 1007 of base station apparatus 1800 outputs the received interference power information to IHO execution circuit 1805.

Then, IHO execution circuit 1805 decides whether the reception interference power of the search target slot is greater or smaller than a threshold and when the reception interference power of the search target slot is equal to or smaller than the threshold, IHO execution circuit 1805 decides the relevant slot as a handover destination slot. On the other hand, when the reception interference power of the search target slot is greater than the threshold, IHO execution circuit 1805 requests slot selection circuit 1804 for the next search target slot.

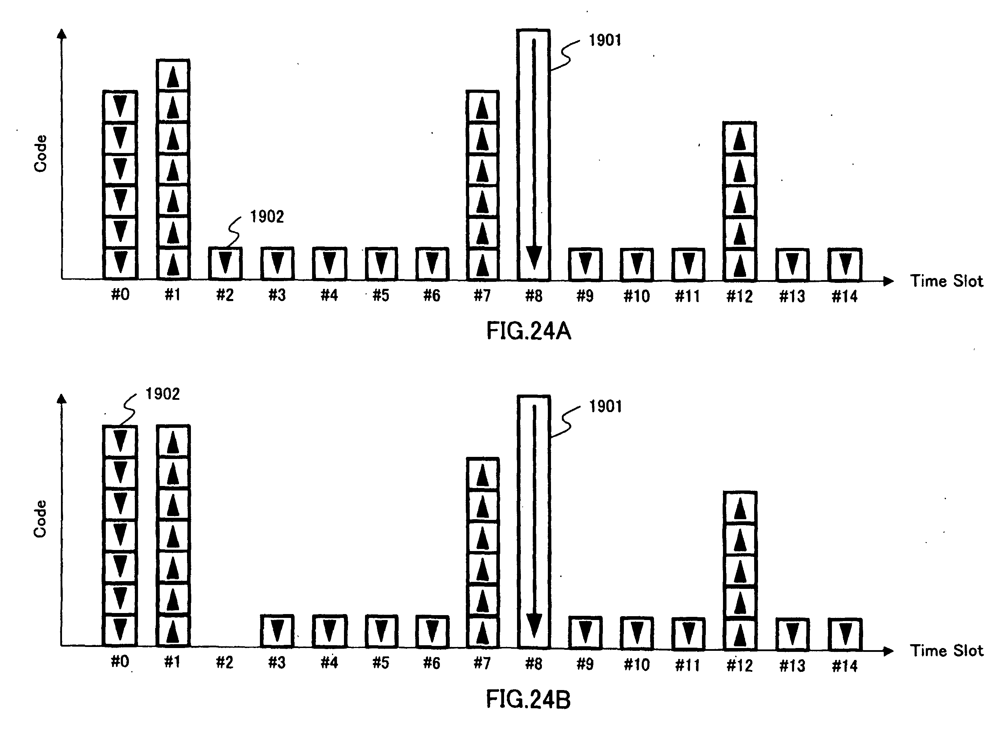

Then, IHO executed by IHO execution circuit 1805 will be explained more specifically using the drawings showing an example of a situation of code multiplexing in each slot in FIG.24A and FIG.24B. In FIG.24A and FIG.24B, the horizontal axis expresses time slots and the vertical axis expresses multiplexed channels.

Up-arrows show uplinks and down-arrows show downlinks. That is, in FIG.24A, downlink channels are allocated to slots #0, #2 to #6, #8 to #11, #13 and #14, while uplink channels are allocated to slots #1, #7 and #12. Channel 1901 of slot #8 indicates a channel for multi-code transmission carried out by one user using a plurality of codes.

Suppose downlink IHO is executed from the state shown in FIG.24A, slot selection circuit 1804 selects channel 1902 of slot #2 as the movement target channel and selects slot #0 as the search target slot.

In this case, IHO execution circuit 1805 carries out channel searching for slot #0 and moves channel 1902 to slot #0 if IHO execution circuit 1805 decides that slot #0 is unoccupied.

FIG.24B shows a code multiplexing situation after channel 1902 is moved to slot #0 from the state in FIG.24A. As shown in FIG.24B, no channel is allocated to slot #2 due to IHO.

Therefore, an uplink channel may be allocated to slot #2 in this case or a multi-code transmission channel such as channel 1901 may be allocated and it is possible to improve the channel utilization effect in the case as shown in FIG.24A where many slots are occupied with a small number of codes to be multiplexed.

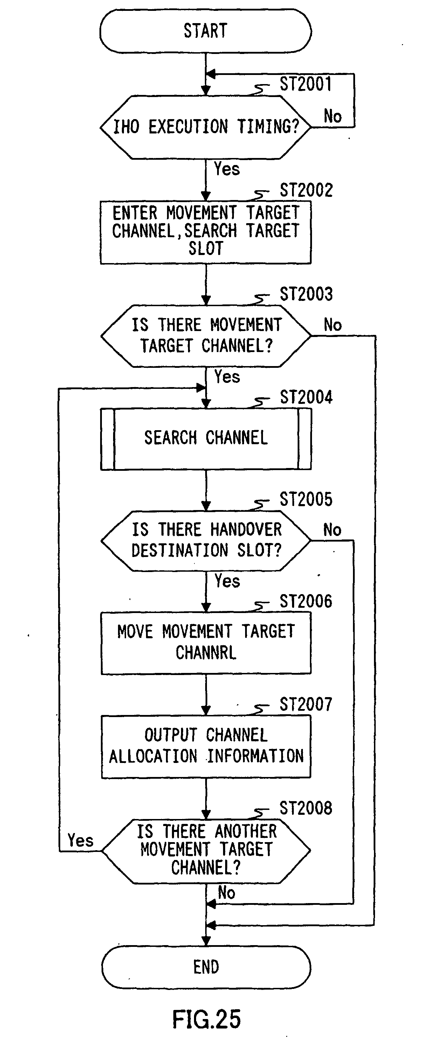

Then, the IHO procedure executed by IHO execution circuit 1805 will be explained using the flow chart in FIG.25.

When the timing to execute IHO is selected in ST2001, information indicating the movement target channel and search target slot is input from slot selection circuit 1804 in ST2002.

Then, the content of the information input from slot selection circuit 1804 is decided in ST2003 and if there is no movement target channel, the process ends here without executing subsequent processing. On the other hand, if some movement target channel is found in ST2003, channel searching is executed on the search target slot in ST2004.

It is decided in ST2005 from the channel search result whether there is a handover destination slot or not and if there is no handover destination slot, the process ends here without executing subsequent processing. On the other hand, if there is some handover destination slot in ST2005, the movement target channel is moved to the handover destination slot in ST2006.

In ST2007, channel allocation information indicating the handover destination slot is output to multiplexing circuit 201 or transmission/reception circuit 204.

Then, in ST2008 when the IHO processing is continued on another channel, the above-described steps from ST2004 to ST2007 are repeated.

Monitoring the code multiplexing situation in each slot at predetermined timing and executing IHO based on a precedence function value, etc. makes it possible to maintain the code pooling state and improve the channel utilization effect. When the channel segregation method is ARP (Autonomous Reuse Partitioning), this has the effect of reconstructing reuse partitioning.

The above-described embodiments have described the case where the base station apparatus has the uplink precedence table and downlink precedence table independently, but the present invention is not limited to this and if the uplink and downlink are assigned in pairs, etc., the base station apparatus needs to have only one of the channel precedence tables.

Furthermore, the above-described embodiments have described the case where the base station apparatus carries out precedence table update processing, but a radio network controller (RNC), for example, can also perform the precedence table update processing.

As is apparent from the above-described explanations, when channel allocation is carried out, the present invention can promote channel segregation and perform efficient channel allocation by preferentially searching for slots where a call termination occurred. The present invention can also update the content of the precedence table at predetermined timing as appropriate, and therefore the base station apparatus can allocate channels based on the content of the precedence table that reflects the current channel quality.

Industrial Applicability

The present invention is ideally applicable to a radio communication system that performs channel segregation.

**Claims**

1. A base station apparatus, carrying out the radio communication and performing dynamic channel allocation in the CDMA/TDD system, comprising:

   slot selecting means (1804) for selecting a slot (#2) in accordance with a result compared between the interference level and a predetermined threshold, for the use of the channel allocation;

   handover means (1805) for determining a handover destination slot and performing an intra-cell handover;

   **characterized in that**
   handover means (1805) being further configured to move all code channels (1902) in a slot (#2) to another slot (#0), which already includes some code channels but still has free space to accommodate more code channels for the transmission in the same direction, in case that the originated slot (#2) is occupied with only a small number of code channels (1902), so that the released slot (#2) can be prepared to be allocated to a call or an application, which needs a large amount of capacity of the communication resources.

2. The base station apparatus according to claim 1, wherein said slot selecting means is adapted to select a slot, in which only one channel with one code is allocated as the handover target channel.

3. The base station apparatus according to claim 1 or 2, wherein said handover means is adapted to perform channel searching for a candidate slot and decide said slot as the handover destination slot when the interference power is equal to or smaller than a threshold.

4. The base station apparatus according to any of claims 1 through 3, further comprising:

   a timing controlling means (1803) for instructing the start of intra-cell handover at a timing at which a call connection request is issued.

5. The base station apparatus according to any of claims 1 through 4, wherein said timing controlling means is adapted to instruct the start of intra-cell handover at a timing at which a call termination occurs.

6. The base station apparatus according to any of claims 1 through 5, wherein said timing controlling means is adapted to instruct the start of intra-cell handover in a predetermined frame cycle.

7. A channel allocation method in the CDMA/TDD system, comprising the steps of:

selecting a slot (#2) in accordance with a result compared between the interference level and a predetermined threshold, for the use of the channel allocation;

determining a handover destination slot and performing an intra-cell handover;

**characterized by**
moving all code channels (1902) in a slot (#2) to another slot (#0), which already includes some code channels but still has free space to accommodate more code channels for the transmission in the same direction, in case that the originated slot (#2) is occupied with only a small number of code channels (1902), so that the released slot (#2) can be prepared to be allocated to a call or an application, which needs a large amount of capacity of the communication resources.

**Patentansprüche**

1. Basisstationsvorrichtung zum Ausführen einer Funkkommunikation und zum Durchführen einer Kanalvergabe in einem CDMA/TDD-System, mit:

einer Schlitzauswahleinrichtung (1804) zum Auswählen eines Schlitzes (#2) für die Verwendung bei der Kanalvergabe in Übereinstimmung mit dem Ergebnis eines Vergleichs zwischen dem Interferenzpegel und einem vorbestimmten Schwellwert,

einer Handover-Einrichtung (1805) zum Bestimmen eines Handover-Zielschlitzes und zum Durchführen eines Intra-Cell-Handovers,

**dadurch gekennzeichnet, dass**
die Handover-Einrichtung (1805) weiterhin konfiguriert ist, um alle Codekanäle (1902) in einem Schlitz (#2) zu einem anderen Schlitz (#0) zu verschieben, der bereits einige Codekanäle enthält, aber immer noch freien Platz für die Unterbringung von weiteren Codekanälen für die Übertragung in derselben Richtung aufweist, wenn der ursprüngliche Schlitz (#2) mit nur einer kleinen Anzahl von Codekanälen (1902) belegt ist, sodass der freigegebene Schlitz (#2) vorbereitet werden kann, um für einen Anruf oder eine Anwendung vergeben zu werden, der bzw. die eine große Kapazität der Kommunikationsressourcen erfordert.

2. Basisstationsvorrichtung nach Anspruch 1, **dadurch gekennzeichnet, dass** die Schlitzauswahleinrichtung dafür ausgebildet ist, einen Schlitz, in dem nur ein Kanal mit einem Code zugewiesen ist, als Handover-Zielkanal auszuwählen.

3. Basisstationsvorrichtung nach Anspruch 1 oder 2, **dadurch gekennzeichnet, dass** die Handover-Einrichtung dafür ausgebildet ist, eine Kanalsuche nach einem Kandidatenschlitz durchzuführen und den Schlitz als Handover-Zielschlitz zu wählen, wenn die Interferenzleistung gleich oder kleiner als ein Schwellwert ist.

4. Basisstationsvorrichtung nach einem der Ansprüche 1 bis 3, weiterhin **gekennzeichnet durch**:

eine Zeitsteuereinrichtung (1803) zum Anweisen des Beginns eines Intra-Cell-Handovers zu einem Zeitpunkt, zu dem die Anrufverbindungsanforderung ausgegeben wird.

5. Basisstationsvorrichtung nach einem der Ansprüche 1 bis 4, **dadurch gekennzeichnet, dass** die Zeitsteuereinrichtung dafür ausgebildet ist, den Beginn des Intra-Cell-Handovers zu einem Zeitpunkt anzuweisen, zu dem eine Anrufbeendigung auftritt.

6. Basisstationsvorrichtung nach einem der Ansprüche 1 bis 5, **dadurch gekennzeichnet, dass** die Zeitsteuereinrichtung dafür ausgebildet ist, den Beginn des Intra-Cell-Handovers in einem vorbestimmten Rahmenzyklus anzuweisen.

7. Kanalvergabeverfahren in dem CDMA/TDD-System mit folgenden Schritten:

Auswählen eines Schlitzes (#2) für die Verwendung bei der Kanalvergabe in Übereinstimmung mit dem Ergebnis eines Vergleichs zwischen dem Interferenzpegel und einem vorbestimmten Schwellwert,

Bestimmen eines Handover-Zielschlitzes und Durchführen eines Intra-Cell-Handovers,

**gekennzeichnet durch**

Verschieben aller Codekanäle (1902) in einem Schlitz (#2) zu einem anderen Schlitz (#0), der bereits einige Codekanäle enthält, aber immer noch freien Platz für die Unterbringung von weiteren Codekanälen für die Übertragung in derselben Richtung aufweist, wenn der ursprüngliche Schlitz (#2) mit nur einer kleinen Anzahl von Codekanälen (1902) belegt ist, sodass der freigegebene Schlitz (#2) vorbereitet werden kann, um für einen Anruf oder eine Anwendung vergeben zu werden, der bzw. die eine große Kapazität der Kommunikationsressourcen erfordert.

## Revendications

1. Dispositif de station de base, exécutant la communication radio et exécutant une allocation dynamique de canal dans le système à accès CDMA/TDD, comprenant :

   un moyen de sélection de tranche (1804) destiné à sélectionner une tranche (#2) conformément à un résultat d'une comparaison entre le niveau d'interférence et un seuil prédéterminé, pour l'utilisation de l'allocation de canal,
   un moyen de transfert (1805) destiné à déterminer une tranche de destination du transfert et à exécuter un transfert intra-cellule,

   **caractérisé en ce que**
   le moyen de transfert (1805) est en outre configuré pour déplacer tous les canaux de codage (1902) dans une tranche (#2) vers une autre tranche (#0), qui comprend déjà certains canaux de codage mais comporte encore de l'espace libre pour recevoir davantage de canaux de codage pour la transmission dans le même sens, au cas où la tranche émise (#2) n'est occupée que par un petit nombre de canaux de codage (1902), de sorte que la tranche délivrée (#2) peut être préparée pour être allouée à un appel ou une application, qui a besoin d'une grande quantité de capacité des ressources de communications.

2. Dispositif de station de base selon la revendication 1, dans lequel ledit moyen de sélection de tranche est conçu pour sélectionner une tranche, dans laquelle un seul canal avec un code est alloué en tant que canal cible du transfert.

3. Dispositif de station de base selon la revendication 1 ou 2, dans lequel ledit moyen de transfert est conçu pour exécuter une recherche dans un canal pour une tranche candidate et définir ladite tranche comme tranche de destination du transfert lorsque la puissance des interférences est inférieure ou égale à un seuil.

4. Dispositif de station de base selon l'une quelconque des revendications 1 à 3, comprenant en outre :

   un moyen de commande de synchronisation (1803) destiné à donner comme instruction le lancement d'un transfert intra-cellule à un instant auquel une demande de connexion d'appel est émise.

5. Dispositif de station de base selon l'une quelconque des revendications 1 à 4, dans lequel ledit moyen de commande de synchronisation est conçu pour donner comme instruction le lancement d'un transfert intra-cellule à un instant auquel a lieu une interruption d'appel.

6. Dispositif de station de base selon l'une quelconque des revendications 1 à 5, dans lequel ledit moyen de commande de synchronisation est conçu pour donner comme instruction le lancement d'un transfert intra-cellule dans un cycle de trame prédéterminé.

7. Procédé d'allocation de canal dans le système à accès CDMA/TDD, comprenant les étapes consistant à :

   sélectionner une tranche (#2) conformément à un résultat de comparaison entre le niveau d'interférence et un seuil prédéterminé, pour l'utilisation de l'allocation de canal,
   déterminer une tranche de destination de transfert et exécuter un transfert intra-cellule,

   **caractérisé par**
   le déplacement de tous les canaux de codage (1902) dans une tranche (#2) vers une autre tranche (#0), qui comprend déjà certains canaux de codage mais comporte encore de l'espace libre pour recevoir davantage de canaux de codage pour la transmission dans le même sens, dans le cas où la tranche émise (#2) n'est occupée qu'avec un petit nombre de canaux de codage (1902) de sorte que la tranche délivrée (#2) peut être préparée pour être allouée à un appel ou une application, qui a besoin d'une grande quantité de capacité des ressources de communications.

```
                    ┌─────────────────────┐
                    │   CALL GENERATION   │
                    └──────────┬──────────┘
                               │
        ┌──────────────────────┤
        │                      │  ⌐ ST1
        │           ┌──────────▼──────────┐
        │           │  MEASURE RECEPTION  │
        │           │  POWER OF NON-BUSY  │
        │           │  CHANNEL WITH HIGH  │
        │           │      PRIORITY       │
        │           └──────────┬──────────┘
        │                      │  ⌐ ST2
        │                  ╱───▼────╲
        │                 ╱          ╲      No
        │                ╱ INTERFERENCE ╲──────────────────┐
        │                ╲  > THRESHOLD ╱                  │
        │                 ╲            ╱                    │
        │                  ╲───┬──────╱                     │
        │                      │ Yes                        │
        │                      │  ⌐ ST3                     │  ⌐ ST4
        │           ┌──────────▼──────────┐      ┌──────────▼──────────┐
        │           │ SET CHANNEL TO      │      │  ALLOCATE CHANNEL   │
        │           │     "BUSY"          │      │                     │
        │           └──────────┬──────────┘      └──────────┬──────────┘
        │                      │  ⌐ ST6                     │  ⌐ ST5
        │           ┌──────────▼──────────┐      ┌──────────▼──────────┐
        │           │ DECREASE PRECEDENCE │      │ INCREASE PRECEDENCE │
        │           │ FUNCTION OF CHANNEL │      │ FUNCTION OF CHANNEL │
        │           └──────────┬──────────┘      └──────────┬──────────┘
        │                      │  ⌐ ST7                     │
        │  No              ╱───▼────╲                       │
        └─────────────────╱ COMPLETE ╲                      │
                         ╱MEASUREMENT ╲                     │
                         ╲ OF ALL     ╱               ┌─────▼─────┐
                          ╲ CHANNELS ╱                │    END    │
                           ╲───┬────╱                 └───────────┘
                               │ Yes
                        ┌──────▼──────┐
                        │     END     │
                        └─────────────┘
```

# FIG.1

TRANSMISSION
SIGNAL

105

MULTIPLEXING
CIRCUIT

102

CODING
CIRCUIT

101

TRANSMISSION
/RECEPTION
CIRCUIT

RECEIVED
SIGNAL

103

DECODING
CIRCUIT

104

INTERFERENCE
POWER
MEASURING
CIRCUIT

FIG.2

EP 1 204 287 B1

200 : BASE STATION APPARATUS

201

TRANSMISSION
/RECEPTION
CIRCUIT

202

CODING
CIRCUIT

TRANSMISSION
SIGNAL

203

DECODING
CIRCUIT

204

SEPARATION
CIRCUIT

RECEIVED
SIGNAL

205

PROPAGATION
PATH
MEASURING
CIRCUIT

206

CHANNEL
ALLOCATION
RESULT

CHANNEL ALLOCATION CIRCUIT

CHANNEL
ALLOCATION
REQUEST

207

PRECEDENCE
TABLE

208

TABLE UPDATE
CIRCUIT

CALL
TERMINATION
INFORMATION

FIG.3

| SLOT NUMBER | #1 | #3 | #5 | #7 | #9 | #11 | #13 |
|---|---|---|---|---|---|---|---|
| PRECEDENCE FUNCTION | 0.85 | 0.65 | 0.78 | 0.39 | 0.70 | 0.31 | 0.28 |
| CALL TERMINATION ORDER | | 3 | 1 | | 2 | 5 | 4 |

## FIG.4

FIG.5

EP 1 204 287 B1

| SLOT NUMBER | #1 | #3 | #5 | #7 | #9 | #11 | #13 |
|---|---|---|---|---|---|---|---|
| PRECEDENCE FUNCTION | 0.85 | 0.65 | 0.78 | 0.39 | 0.70 | 0.31 | 0.28 |
| CALL TERMINATION ORDER | | 3 | 1 | | 2 | 5 | 4 |

FIG.6

EP 1 204 287 B1

400 : BASE STATION APPARATUS

201

TRANSMISSION
/RECEPTION
CIRCUIT

202

CODING CIRCUIT

TRANSMISSION
SIGNAL

203

DECODING CIRCUIT

204

SEPARATION
CIRCUIT

RECEIVED
SIGNAL

401

INTERFERENCE
POWER MEASURING
CIRCUIT CHANNEL
ALLOCATION RESULT

404

CHANNEL
ALLOCATION
RESULT

CHANNEL ALLOCATION CIRCUIT

UPLINK/DOWNLINK
IDENTIFICATION
SIGNAL

402

UPLINK PRECEDENCE
TABLE

403

DOWNLINK
PRECEDENCE
TABLE

FIG.7

CHANNEL ALLOCATION
REQUEST

ST501

Yes UPLINK No

ST502

ASSIGN UPLINK CHANNEL

ST503

ASSIGN DOWNLINK
CHANNEL

END

FIG.8

FIG.9

```
                        ┌─────────────┐
                        │     IN      │
                        └─────────────┘
                               │
                               │        ST701
                               ▼
              ┌────────────────────────────────┐
              │    MEASURE INTERFERENCE        │
              │    POWER OF NON-BUSY           │
              │    CHANNEL WITH HIGH           │
              │  PRECEDENCE FUNCTION AT        │
              │       MOBILE UNIT              │
              │   (INTERFERENCE POWER D)       │
              └────────────────────────────────┘
                               │
                               │          ST702
                               ▼
                    ╱──────────────────╲         Yes
                   ╱   INTERFERENCE D<   ╲──────────────┐
                   ╲    THRESHOLD D1     ╱              │
                    ╲──────────────────╱               │
                          │ No                          │
                          │       ST706                 │      ST703
                          ▼                             ▼
              ┌───────────────────────┐    ┌───────────────────────┐
              │  SET CHANNEL DOWNLINK  │    │  ASSIGN DOWNLINK OF    │
              │       TO "BUSY"        │    │       CHANNEL          │
              └───────────────────────┘    └───────────────────────┘
                          │       ST707                 │      ST704
                          ▼                             ▼
              ┌───────────────────────┐    ┌───────────────────────┐
              │  DECREASE DOWNLINK     │    │  INCREASE PRECEDENCE   │
              │ PRECEDENCE FUNCTION OF │    │ FUNCTION OF DOWNLINK   │
              │       CHANNEL          │    │     OF CHANNEL         │
              └───────────────────────┘    └───────────────────────┘
                          │       ST708                 │      ST705
                          ▼                             ▼
              ┌───────────────────────┐    ┌───────────────────────┐
              │   INCREASE UPLINK      │    │  DECREASE PRECEDENCE   │
              │ PRECEDENCE FUNCTION OF │    │ FUNCTION OF UPLINK OF  │
              │       CHANNEL          │    │       CHANNEL          │
              └───────────────────────┘    └───────────────────────┘
                          │       ST709                 │
                          ▼                             │
          No    ╱──────────────────╲                    │
        ┌──────╱   MEASUREMENT OF ALL ╲                 │
        │      ╲  CHANNELS COMPLETED? ╱                 │
        │       ╲──────────────────╱                    │
        │             │ Yes                             │
        │             │       ST710                     │
        │             ▼                                 │
        │  ┌───────────────────────┐                    │
        │  │ ASSIGNMENT TO DOWNLINK │                   │
        │  │      IMPOSSIBLE        │                   │
        │  └───────────────────────┘                   │
        │             │                                 │
        │             ▼                                 │
        │      ┌─────────────┐◄───────────────────────┘
        │      │    OUT      │
        │      └─────────────┘
```

## FIG.10

IN

ST801

VARIATION OF POWER
OF DESIRED SIGNAL IS
SMALL AND INTERFERENCE
INCREASES

No

Yes

ST802

INCREASE UPLINK(OR
DOWNLINK)PRECEDENCE
FUNCTION OF CHANNEL

OUT

FIG.11

900 : COMMUNICATION TERMINAL APPARATUS

FIG.12

901 MULTIPLEXING CIRCUIT
902 MODULATION CIRCUIT
903 SPREADING CIRCUIT
904 TRANSMISSION /RECEPTION CIRCUIT
905 DESPREADING CIRCUIT
906 DEMODULATION CIRCUIT
907 SEPARATION CIRCUIT
908 INTERFERENCE POWER MEASURING CIRCUIT

TRANSMISSION SIGNAL

RECEIVED SIGNAL

FIG.13

TRANSMISSION/RECEPTION CIRCUIT 1004

SPREADING CIRCUIT 1003

MODULATION CIRCUIT 1002

MULTIPLEXING CIRCUIT 1001

TRANSMISSION SIGNAL

DESPREADING CIRCUIT 1005

DEMODULATION CIRCUIT 1006

SEPARATION CIRCUIT 1007

RECEIVED SIGNAL

INTERFERENCE POWER MEASURING CIRCUIT 1008

TIMING CONTROL CIRCUIT 1011

1013

CHANNEL ALLOCATION CIRCUIT

SLOT SELECTION CIRCUIT 1012

UPLINK PRECEDENCE TABLE 1009

DOWNLINK PRECEDENCE TABLE 1010

EP 1 204 287 B1

START

ST1101

PREDETERMINED FRAME CYCLE ELAPSED? — No

Yes

ST1102

SELECT SEARCH TARGET SLOT

ST1103

MEASURE RECEPTION INTERFERENCE POWER

ST1104

RECEPTION INTERFERENCE POWER > THRESHOLD — No

Yes

ST1106

DECREASE PRECEDENCE FUNCTION

ST1105

INCREASE PRECEDENCE FUNCTION

ST1107

No — UPDATE ALL SLOTS ?

Yes

END

FIG.14

START

ST1201

PREDETERMINED FRAME
CYCLE ELAPSED?  No

Yes

ST1202

SELECT SEARCH
TARGET SLOT

ST1203

MEASURE NUMBER OF
CODES TO BE
MULTIPLEXED

ST1204

NUMBER OF CODES
TO BE MULTIPLEXED>  No
THRESHOLD

Yes

ST1206

INCREASE PRECEDENCE
FUNCTION

ST1205

DECREASE PRECEDENCE
FUNCTION

ST1207

No  UPDATE ALL SLOTS ?

Yes

END

FIG.15

FIG.16

| TRANSMISSION RATE | THRESHOLD (dB) | #0 | #1 | #2 | #3 | #4 | #5 | #6 | #7 | #8 | #9 | #10 | #11 | #12 | #13 | #14 |
|---|---|---|---|---|---|---|---|---|---|---|---|---|---|---|---|---|
| 8Kbps | 2.5 | 0.25 | 0.56 | 0.13 | 0.15 | 0.42 | 0.73 | 0.15 | 0.07 | 0.27 | 0.31 | 0.11 | 0.22 | 0.61 | 0.47 | 0.19 |
| 12.2Kbps | 2.9 | 0.16 | 0.53 | 0.18 | 0.21 | 0.51 | 0.81 | 0.24 | 0.03 | 0.31 | 0.41 | 0.09 | 0.27 | 0.71 | 0.43 | 0.24 |
| 64Kbps | 3.7 | 0.24 | 0.52 | 0.15 | 0.23 | 0.56 | 0.67 | 0.21 | 0.10 | 0.35 | 0.33 | 0.16 | 0.21 | 0.80 | 0.40 | 0.21 |
| 144Kbps | 4.2 | 0.22 | 0.59 | 0.13 | 0.16 | 0.44 | 0.77 | 0.18 | 0.13 | 0.38 | 0.29 | 0.17 | 0.19 | 0.75 | 0.41 | 0.27 |
| 386Kbps | 4.8 | 0.21 | 0.63 | 0.20 | 0.19 | 0.50 | 0.90 | 0.22 | 0.08 | 0.33 | 0.30 | 0.12 | 0.30 | 0.66 | 0.48 | 0.26 |
| 2Mbps | 5.6 | 0.18 | 0.61 | 0.11 | 0.24 | 0.47 | 0.81 | 0.15 | 0.05 | 0.32 | 0.36 | 0.06 | 0.25 | 0.69 | 0.44 | 0.18 |

FIG.17

START

ST1401
IS THERE CALL
CONNECTION REQUEST? — No

Yes

ST1402
SELECT SEARCH
TARGET SLOT

ST1403
MEASURE RECEPTION
INTERFERENCE POWER

ST1404
POWER OF
INTERFERENCE SIGNAL
≦THRESHOLD? — Yes

No

ST1405
INCREASE PRECEDENCE
FUNCTION OF RELEVANT
SLOT

ST1407
DECREASE PRECEDENCE
FUNCTION OF RELEVANT
SLOT

ST1406
ALLOCATE CHANNEL TO
RELEVANT SLOT

ST1408
EXCLUDE RELEVANT SLOT
FROM AMONG CANDIDATES

ST1409
IS THERE
UNSELECTED SLOT? — Yes

No

ST1410
CALL LOSS

END

FIG.18

FIG.19

EP 1 204 287 B1

| SLOT NUMBER | #0 | #1 | #2 | #3 | #4 | #5 | #6 | #7 | #8 | #9 | #10 | #11 | #12 | #13 | #14 |
|---|---|---|---|---|---|---|---|---|---|---|---|---|---|---|---|
| PRECEDENCE FUNCTION | 0.25 | 0.56 | 0.13 | 0.15 | 0.42 | 0.73 | 0.15 | 0.07 | 0.27 | 0.31 | 0.11 | 0.22 | 0.61 | 0.47 | 0.19 |
| CODE MULTIPLEXING | 1 | 6 | 0 | 0 | 3 | 6 | 0 | 0 | 1 | 2 | 0 | 1 | 6 | 5 | 1 |

FIG.20

```
                    ┌─────────────┐
                    │    START    │
                    └──────┬──────┘
                           │        ⌇ ST1601
                    ┌──────▼──────┐
                    │  GROUPING   │
                    └──────┬──────┘
                           │        ⌇ ST1602
                    ┌──────▼──────────┐
                    │ SET PREFERENTIAL│
                    │     GROUP       │
                    └──────┬──────────┘
                           │        ⌇ ST1603
                    ┌──────▼──────────┐
                    │ SELECT CANDIDATE│
                    │      SLOT       │
                    └──────┬──────────┘
                           │        ⌇ ST1604
                    ┌──────▼──────────┐
                    │ MEASURE POWER OF│
                    │INTERFERENCE SIGNAL│
                    └──────┬──────────┘
                           │        ⌇ ST1605
                      POWER OF
               Yes  INTERFERENCE SIGNAL
              ◄─────  ≦THRESHOLD?
                           │ No
```

POWER OF INTERFERENCE SIGNAL ≦THRESHOLD?

ST1606 INCREASE PRECEDENCE FUNCTION OF RELEVANT SLOT

ST1607 ALLOCATE CHANNEL TO RELEVANT SLOT

ST1608 DECREASE PRECEDENCE FUNCTION OF RELEVANT SLOT

ST1609 EXCLUDE RELEVANT SLOT FROM AMONG CANDIDATES

ST1610 IS THERE UNSELECTED SLOT? Yes

No

ST1611 EXCLUDE RELEVANT GROUP FROM PREFERENTIAL GROUP

ST1612 IS THERE UNSEARCHED GROUP? Yes

No

ST1613 CALL LOSS

END

## FIG.21

EP 1 204 287 B1

1700 : BASE STATION APPARATUS

| 1004 | | 1003 | 1002 | 1001 | |
|---|---|---|---|---|---|

TRANSMISSION
/RECEPTION
CIRCUIT

SPREADING
CIRCUIT — 1003

MODULATION
CIRCUIT — 1002

MULTIPLEXING
CIRCUIT — 1001

TRANSMISSION
SIGNAL

DESPREADING
CIRCUIT — 1005

DEMODULATION
CIRCUIT — 1006

SEPARATION
CIRCUIT — 1007

RECEIVED
SIGNAL

INTERFERENCE
POWER MEASURING
CIRCUIT — 1008

CHANNEL ALLOCATION CIRCUIT — 1504

SLOT SELECTION
CIRCUIT — 1503

UPLINK
PRECEDENCE
TABLE — 1501

SELECTION ORDER
CALCULATION
CIRCUIT — 1701

DOWNLINK
PRECEDENCE
TABLE — 1502

FIG.22

FIG.23

EP 1 204 287 B1

FIG.24A

FIG.24B

START

ST2001

IHO EXECUTION TIMING? No

Yes

ST2002

ENTER MOVEMENT TARGET CHANNEL, SEARCH TARGET SLOT

ST2003

IS THERE MOVEMENT TARGET CHANNEL? No

Yes

ST2004

SEARCH CHANNEL

ST2005

IS THERE HANDOVER DESTINATION SLOT? No

Yes

ST2006

MOVE MOVEMENT TARGET CHANNRL

ST2007

OUTPUT CHANNEL ALLOCATION INFORMATION

ST2008

IS THERE ANOTHER MOVEMENT TARGET CHANNEL?

Yes

No

END

FIG.25